(19) **Europäisches Patentamt / European Patent Office / Office européen des brevets**

(11) **EP 3 647 065 B1**

(12) **EUROPEAN PATENT SPECIFICATION**

(45) Date of publication and mention of the grant of the patent:
**15.01.2025 Bulletin 2025/03**

(21) Application number: **18822958.7**

(22) Date of filing: **02.07.2018**

(51) International Patent Classification (IPC):
**B41M 5/00** (2006.01)    **B41J 2/01** (2006.01)
**C09D 11/30** (2014.01)    **C09D 11/54** (2014.01)
**C09D 11/10** (2014.01)    **C09D 11/104** (2014.01)
**C09D 11/38** (2014.01)    **C09D 11/40** (2014.01)

(52) Cooperative Patent Classification (CPC):
**B41M 5/0017; C09D 11/10; C09D 11/104; C09D 11/38; C09D 11/40; C09D 11/54**

(86) International application number:
**PCT/JP2018/025109**

(87) International publication number:
**WO 2019/004485 (03.01.2019 Gazette 2019/01)**

(54) **PRETREATMENT LIQUID FOR IMPERMEABLE MEDIUM PRINTING, SUBSTRATE FOR PRINTING, METHOD FOR MANUFACTURING SUBSTRATE FOR PRINTING, IMAGE RECORDING METHOD, AND INK SET**

VORBEHANDLUNGSFLÜSSIGKEIT ZUM BEDRUCKEN VON UNDURCHLÄSSIGEM MEDIUM, SUBSTRAT ZUM DRUCKEN, VERFAHREN ZUR HERSTELLUNG EINES SUBSTRATS ZUM DRUCKEN, BILDAUFZEICHNUNGSVERFAHREN UND TINTENSATZ

LIQUIDE DE PRÉTRAITEMENT POUR IMPRESSION DE SUPPORT IMPERMÉABLE, SUBSTRAT POUR IMPRESSION, PROCÉDÉ DE FABRICATION D'UN SUBSTRAT POUR IMPRESSION, PROCÉDÉ D'IMPRESSION D'IMAGE ET ENSEMBLE D'ENCRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2017 JP 2017129436**
**28.12.2017 JP 2017254779**

(43) Date of publication of application:
**06.05.2020 Bulletin 2020/19**

(73) Proprietor: **FUJIFILM Corporation**
**Tokyo 106-8620 (JP)**

(72) Inventors:
• **FUJII, Yusuke**
**Ashigarakami-gun**
**Kanagawa 258-8577 (JP)**
• **MIYATO, Takeshi**
**Ashigarakami-gun**
**Kanagawa 258-8577 (JP)**

• **FUKAGAWA, Kiyotaka**
**Ashigarakami-gun**
**Kanagawa 258-8577 (JP)**

(74) Representative: **Klunker IP**
**Patentanwälte PartG mbB**
**Destouchesstraße 68**
**80796 München (DE)**

(56) References cited:
**EP-A1- 2 100 929       WO-A1-2016/136914**
**JP-A- 2009 241 586     JP-A- 2013 018 156**
**JP-A- 2017 013 350     JP-A- 2017 088 646**
**JP-A- 2017 114 934**

• **ANONYMOUS: "(non-official translation) "Water-soluble polyester resin plus coat"", 1 April 2015 (2015-04-01), pages 1 - 7, XP055658152, Retrieved from the Internet <URL:http://www. goo-chem.co. jp/product/pdf/water_soluble_polyester_resins/ plascoat_list_jp_2013.pdf>**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 647 065 B1

**Description**

BACKGROUND OF THE INVENTION

1. Field of the Invention

The present disclosure relates to a pretreatment liquid for impermeable medium printing, a base material for printing, a method of producing a base material for printing, an image recording method, and an ink set.

2. Description of the Related Art

A recording method carried out using an ink jet method has been widely used because high-quality images can be recorded on various base materials by jetting an ink in the form of liquid droplets from a plurality of nozzles provided in an ink jet head.

Various forms of image recording methods carried out using an ink jet method have been suggested.

For example, a method of using an ink set formed by combining an ink that contains water and a colorant with a pretreatment liquid that contains an aggregating agent which allows components in the ink to aggregate has been known. According to this method, for example, an image with a high resolution can be formed by bringing the ink and the pretreatment liquid into contact with each other.

For example, JP2017-013349A describes a recording method which includes attaching of a pretreatment liquid containing an aggregating agent and a resin I that does not react with the aggregating agent to a recording medium; and attaching of an ink composition that contains a resin II having a core-shell structure to the recording medium to which the pretreatment liquid has been attached so that a glass transition temperature TgB of the resin I and a glass transition temperature TgD of the core portion of the resin II satisfy the relationship of Expression (1).

$$|TgB - TgD| \le 20 \cdots (1)$$

JP2013-018156A describes an image recording method which includes a step of applying an ink containing a pigment dispersed by an acidic group to a recording medium; and a step of applying an acidic liquid composition that destabilizes the dispersed state of the pigment in the ink to the recording medium such that at least the acidic liquid composition partially overlaps the region to which the ink is applied, in which the liquid composition contains resin fine particles containing at least one selected from a sulfonic acid group or a phosphoric acid group.

JP2010-115854A describes a printing method of an ink jet recording system which includes coating of non-ink-absorbing and low-ink-absorbing recording media with a color ink, a resin ink, and a reactive ink according to an ink jet recording system using an aqueous ink set to print an image, in which (1) the aqueous ink set comprises the color ink which contains a colorant, the resin ink which contains resin particles without containing a colorant, and the reactive ink which contains a reactant causing aggregation in constituent components of the color ink and the resin ink, (2) the color ink contains a water-insoluble colorant, a water-soluble and/or water-insoluble resin component, a water-soluble solvent, and a surfactant, (3) the resin ink contains a water-soluble resin solvent and thermoplastic resin particles which are insoluble in water but compatible with the water-soluble resin solvent, and the total content of the resin particles is greater than or equal to the content of the colorant contained in the color ink, (4) the reactive ink contains a reactant selected from a polyvalent metal salt, polyallylamine, and a derivative thereof, and a surfactant, and (5) the printing method includes a drying step during and/or after the printing.

JP2009-241586A describes an image recording method including a treatment liquid application step of applying an aqueous treatment liquid that contains 10% by mass or greater of a water-soluble organic solvent having an SP value of 13 or less, 1.5% by mass or greater of resin particles, and water to a recording medium having a water absorption amount of 14 ml/m$^2$ or less at a contact time of 900 msec according to the Bristow method; a barrier layer formation step of drying the applied aqueous treatment liquid such that 70% by mass or greater of water contained in the aqueous treatment liquid evaporates until 900 msec elapses from the start of the application of the aqueous treatment liquid in the treatment liquid application step to form a barrier layer on the recording medium; and an image recording step of jetting an aqueous ink that contains a pigment, resin particles, a water-soluble organic solvent, and water onto the barrier layer according to an ink jet method to record an image.

EP 2 100 929 A1 describes a pretreatment liquid for medium printing, comprising resin particles, at least one aggregating agent selected from the group consisting of a polyvalent metal compound, an organic acid or a salt thereof, and a metal complex; and water. The pretreatment composition includes PLAS COAT Z-561 as resin particles having a water contact angle of 55°. The composition can be used for impermeable printing medium having 900 msec absorption of

4 ml/m$^2$ or polyethylene. The pretreatment liquid is used in a combination with an ink containing colourant.

SUMMARY OF THE INVENTION

As described in the image recording methods of JP2017-013349A, JP2013-018156A, and JP2010-115854A, it was found that in a case where an impermeable medium to which a pretreatment liquid containing an aggregating agent has been applied is used, for example, a component (for example, the aggregating agent) contained in the pretreatment liquid that is present in a non-image area in the absence of an ink is transferred to a region in contact with the impermeable medium in some cases.

Particularly in a case where the impermeable medium after the printing in the printing step is wound to be used as a roll, since the non-image area in the printed surface and the rear surface of the impermeable medium come into contact with each other in the roll, the component contained in the pretreatment liquid leaking from the non-image area is transferred to the rear surface of the impermeable medium in some cases.

Further, in JP2009-241586A, the object thereof is to suppress curling of a base material in a case of using a paper medium as the base material, and printing using an impermeable medium has not been considered.

An object to be achieved by an embodiment according to the present disclosure is to provide a pretreatment liquid for impermeable medium printing in which transfer of a component contained in the pretreatment liquid from a printed surface is suppressed at the time of application of the pretreatment liquid to an impermeable medium and from which a base material for printing with an excellent image quality of a printed material is obtained.

An object to be achieved by another embodiment according to the present disclosure is to provide a base material for printing in which transfer of a component contained in a pretreatment liquid from a printed surface is suppressed in a case where an impermeable medium to which the pretreatment liquid has been applied is used for printing and has an excellent image quality of a printed material, and a production method thereof.

An object to be achieved by still another embodiment according to the present disclosure is to provide an image recording method in which transfer of a component contained in a pretreatment liquid from a printed surface is suppressed at the time of performing printing on an impermeable medium to which the pretreatment liquid has been applied and from which a printed material with an excellent image quality is obtained.

An object to be achieved by even still another embodiment according to the present disclosure is to provide an ink set in which transfer of a component contained in a pretreatment liquid from a printed surface is suppressed at the time of performing printing on an impermeable medium and from which a printed material with an excellent image quality is obtained.

According to an embodiment of the present disclosure, it is possible to provide a pretreatment liquid for impermeable medium printing in which transfer of a component contained in the pretreatment liquid from a printed surface is suppressed at the time of application of the pretreatment liquid to an impermeable medium and from which a base material for printing with an excellent image quality of a printed material is obtained.

According to another embodiment of the present disclosure, it is possible to provide a base material for printing in which transfer of a component contained in a pretreatment liquid from a printed surface is suppressed in a case where an impermeable medium to which the pretreatment liquid has been applied is used for printing and has an excellent image quality of a printed material, and a production method thereof.

According to still another embodiment of the present disclosure, it is possible to provide an image recording method in which transfer of a component contained in a pretreatment liquid from a printed surface is suppressed at the time of performing printing on an impermeable medium to which the pretreatment liquid has been applied and from which a printed material with an excellent image quality is obtained.

According to even still another embodiment of the present disclosure, it is possible to provide an ink set in which transfer of a component contained in a pretreatment liquid from a printed surface is suppressed at the time of performing printing on an impermeable medium and from which a printed material with an excellent image quality is obtained.

BRIEF DESCRIPTION OF THE DRAWINGS

Fig. 1 is a schematic configuration view illustrating a configuration example of an ink jet recording device used for forming an image.

Fig. 2 is a view conceptually showing characters in a character image used for evaluation of the image resolution in examples.

Fig. 3 is a view for describing the details of the evaluation standards for the image resolution in the examples.

DESCRIPTION OF THE PREFERRED EMBODIMENTS

The numerical ranges shown using "to" in the present disclosure indicate ranges including the numerical values described before and after "to" as the lower limits and the upper limits.

In the present disclosure, in a case where a plurality of substances corresponding to respective components in a composition are present, the amount of the respective components in the composition indicates the total amount of the plurality of substances present in the composition unless otherwise specified.

In the present disclosure, the meaning of the term "step" includes not only an independent step but also a step whose intended purpose is achieved even in a case where the step is not clearly distinguished from other steps.

In the present disclosure, "(meth)acryl" indicates at least one of acryl or methacryl, and "(meth)acrylate" indicates at least one of acrylate or methacrylate.

In the present disclosure, "printing" indicates drawing an image of characters, patterns, or the like using an ink, and "image recording" or "recording of an image" indicates drawing an image on an impermeable medium using a pretreatment liquid (or a treatment layer containing the solid content of a treatment liquid before printing) and an ink and fixing the drawn image.

In the present disclosure, a combination of two or more preferable aspects is a more preferable aspect.

(Pretreatment liquid for impermeable medium printing)

A pretreatment liquid for impermeable medium printing according to the embodiment of the present disclosure (hereinafter, also simply referred to as the "pretreatment liquid") includes resin particles which contain a resin having a glass transition temperature of 30°C or higher and a water contact angle in a range of 25° to 45°, at least one aggregating agent selected from the group consisting of a polyvalent metal compound, an organic acid or a salt thereof, and a metal complex, and water.

According to the pretreatment liquid for impermeable medium printing according to the embodiment of the present disclosure, transfer of a component contained in the pretreatment liquid from a printed surface is suppressed at the time of application of the pretreatment liquid to an impermeable medium, and a base material for printing with an excellent image quality of a printed material is obtained.

The reason why the above-described effects are obtained is not clear, but is assumed as follows.

A base material for printing with an excellent image quality of a printed material is obtained by using a pretreatment liquid for impermeable medium printing which contains an aggregating agent.

Further, it is considered that since the glass transition temperature of the resin contained in the resin particles contained in the pretreatment liquid is 30°C or higher, the hardness of the film is improved due to the resin particles, and thus transfer of the component such as the aggregating agent which is contained in the pretreatment liquid is suppressed.

Further, it is considered that since the water contact angle of the resin contained in the resin particles is 20° or greater (in other words, the resin contained in the resin particles is hydrophobic), the affinity between the resin particles and the aggregating agent is improved, and particularly the leakage of the aggregating agent from the printed surface is suppressed, and thus transfer of the component contained in the pretreatment liquid is suppressed.

In addition, it is assumed that since the water contact angle of the resin contained in the resin particles is 20° or greater, the adhesiveness between the impermeable medium and the resin particles is likely to be improved, and peeling of an image area in the printed surface of the printed material is also likely to be suppressed.

Hereinafter, the pretreatment liquid for impermeable medium printing according to the embodiment of the present disclosure will be described in detail.

<Impermeable medium>

The pretreatment liquid for impermeable medium printing according to the embodiment of the present disclosure is used by being applied to an impermeable medium.

The impermeable medium in the present disclosure indicates a medium having a water absorption amount of 4 ml/m$^2$ or less at a contact time of 900 msec (milliseconds) (also referred to as the "water absorption amount at 900 ms") according to the Bristow method.

The impermeable medium is a medium that does not contain paper, and a resin base material is preferable as the medium.

Further, a known easily adhesive layer may be formed on the surface of the impermeable medium to which the pretreatment liquid is applied.

[Resin base material]

The resin base material used as the impermeable medium is not particularly limited, and examples thereof include a base material formed of a thermoplastic resin.

A base material obtained by molding the thermoplastic resin in the form of a sheet is exemplified as the resin base material.

It is preferable that the resin base material contains polypropylene, polyethylene terephthalate, nylon, polyethylene, polyimide, or polyvinyl chloride and more preferable that the resin base material contains polypropylene, polyethylene terephthalate, nylon, or polyethylene.

The resin base material may be a transparent resin base material or a colored resin base material, and at least a part thereof may be subjected to a metal vapor deposition treatment or the like.

The shape of the resin base material according to the embodiment of the present disclosure is not particularly limited, but a sheet-like resin base material is preferable. From the viewpoint of the productivity of the printed material, a sheet-like resin base material which is capable of forming a roll by being wound is more preferable.

Further, from the viewpoint of suppressing transfer of the component contained in the pretreatment liquid, particularly, the pretreatment liquid according to the embodiment of the present disclosure can be suitably used in printing on a resin base material for soft packaging.

The resin base material may have been subjected to a surface treatment.

Examples of the surface treatment include a corona treatment, a plasma treatment, a flame treatment, a heat treatment, an abrasion treatment, and a light irradiation treatment (UV treatment), but the present invention is not limited thereto. For example, in a case where a corona treatment is performed on the surface of the resin base material before the pretreatment liquid is applied, the surface energy of the resin base material increases, and wetting of the surface of the resin base material and adhesion of the ink and the pretreatment layer to the resin base material are promoted. The corona treatment can be performed using Corona Master (manufactured by Shinko Electric & Instrumentation Co., Ltd., PS-10S) or the like. The conditions for the corona treatment may be appropriately selected depending on the kind of the resin base material, the composition of the pretreatment liquid, the composition of the ink, and the like. For example, the following treatment conditions may be employed.

· Treatment voltage: 10 kV to 15.6 kV
· Treatment speed: 30 mm/s to 100 mm/s

The water contact angle of the surface to of the resin base material to which the pretreatment liquid is applied is preferably in a range of 10° to 150° and more preferably in a range of 30° to 100°.

The surface free energy of the surface of the resin base material to which the pretreatment liquid is applied is preferably 10 $mNm^{-1}$ or greater and more preferably 30 $mNm^{-1}$ or greater.

<Resin particles containing resin with glass transition temperature of 30°C or higher and water contact angle of 20° or greater>

The pretreatment liquid according to the embodiment of the present disclosure contains resin particles (also referred to as "particles containing a specific resin") containing a resin (also referred to as a "specific resin") with a glass transition temperature of 30°C or higher and a water contact angle of 20° or greater.

In the present disclosure, the particles containing a specific resin are particles containing a resin, and particles formed of a resin are preferable.

The particles containing a specific resin may contain, as the resin, only one kind of resin or a plurality of resins.

Further, it is preferable that the resin contained in the particles containing a specific resin is insoluble in water.

In the present specification, the term "water-insoluble" indicates a property in which the amount of a substance to be dissolved in 100 g of water at 25°C is less than 1.0 g (more preferably less than 0.5 g).

[Glass transition temperature]

The particles containing a specific resin used in the present disclosure have a glass transition temperature of 30°C or higher. The upper limit of the glass transition temperature is not particularly limited and may be 120°C.

Further, from the viewpoints of the adhesiveness and suppression of the transfer, the glass transition temperature thereof is preferably in a range of 30°C to 80°C, more preferably in a range of 40°C to 60°C, and still more preferably in a range of 45°C to 60°C.

In the present disclosure, the glass transition temperature of the resin can be measured using the differential scanning calorimetry (DSC) measurement.

# EP 3 647 065 B1

Specific measurement is performed in conformity with the method described in JIS K 7121 (1987) or JIS K 6240 (2011). As the glass transition temperature in the present specification, the extrapolated glass transition starting temperature (hereinafter, also referred to as the Tig) is used.

The method of measuring the glass transition temperature will be described in more detail.

In a case where the glass transition temperature is acquired, the resin is maintained at a temperature lower than the expected Tg of the resin by approximately 50°C until the device is stabilized, the resin is heated to a temperature higher than the temperature at which the glass transition is completed by approximately 30°C at a heating rate of 20°C/min, and a differential thermal analysis (DTA) curve or a DSC curve is created.

The extrapolated glass transition starting temperature (Tig), that is, the glass transition temperature Tg in the present specification is acquired as the temperature of the intersection between a straight line obtained by extending the base line on a low temperature side in the DTA curve or the DSC curve onto a high temperature side and a tangent drawn at a point where the gradient of a curve from a step-like change portion of the glass transition is maximized.

[Water contact angle]

The particles containing a specific resin used in the present disclosure have a water contact angle in a range of 25° to 45°, from the viewpoints of the adhesiveness and suppression of the transfer, and preferably in a range of 25° to 40°.

The water contact angle of the particles containing a specific resin is measured according to the following method.

A solution for measuring the water contact angle with the following composition is prepared using resin particles to be measured. Thereafter, polyethylene terephthalate (PET, FE2001, thickness of 12 $\mu$m, manufactured by Futamura Chemical Co., Ltd.) is coated with the prepared solution for measuring the water contact angle such that the liquid coating amount is set to 1.7 $\mu$m and the solution was dried at 80°C for 30 seconds to produce a film. The measurement of the contact angle is performed on the produced film after 1 minute using a contact angle meter Drop Master DM700 (manufactured by Kyowa Interface Science, Inc.) in conformity with a static method described in JIS R3257:1999. The liquid droplet amount is set to 2 $\mu$L.

- Solution for measuring water contact angle -

   · Particles containing specific resin: 15% by mass in terms of solid content
   · Surfactant: TAYCA POWER BN2070M (manufactured by Tayca Corporation), 0.7% by mass
   · Propylene glycol: 10% by mass
   · Water: remainder

In the present disclosure, the solid content indicates the remainder obtained by excluding water in each component and a solvent such as an organic solvent.

In a case where particles containing two or more different kinds of specific resins are contained in the pretreatment liquid, the content of the particles containing specific resins in the solution for measuring the water contact angle is determined based on the contained mass fraction of the particles containing specific resins in the pretreatment liquid such that the total mass of the particles containing specific resins is set to 15% by mass in terms of the solid content.

For example, in a case where the pretreatment liquid contains 20% by mass of the first specific resin and 80% by mass of the second specific resin with respect to the total mass of the particles containing specific resins in the pretreatment liquid, the measurement is performed using particles containing 3% by mass of the first specific resin in terms of the solid content and 12% by mass of the second specific resin in terms of the solid content for the solution for measuring the water contact angle.

[Structure of particles containing specific resin]

The specific resin used in the present disclosure is not particularly limited, and examples thereof include a polyurethane resin, a polyamide resin, a polyurea resin, a polycarbonate resin, a polyolefin resin, a polystyrene resin, a polyester resin, and an acrylic resin. Among these, a polyester resin or an acrylic resin is preferable, and a polyester resin is more preferable.

- Alicyclic structure or aromatic ring structure -

From the viewpoint of improving the glass transition temperature and the water contact angle, it is preferable that the specific resin used in the present disclosure has an alicyclic structure or an aromatic ring structure in the structure and more preferable that the specific resin has an aromatic ring structure.

As the alicyclic structure, an alicyclic hydrocarbon structure having 5 to 10 carbon atoms is preferable, and a cyclohexane ring structure, a dicyclopentanyl ring structure, a dicyclopentenyl ring structure, or an adamantane ring structure is preferable.

As the aromatic ring structure, a naphthalene ring or a benzene ring is preferable, and a benzene ring is more preferable.

The amount of the alicyclic structure or the aromatic ring structure is not particularly limited and can be preferably used as long as the amount thereof is set such that the glass transition temperature and the water contact angle of the specific resin are set to be in the above-described ranges. For example, the amount thereof is preferably in a range of 0.01 mol to 1.5 mol and more preferably in a range of 0.1 mol to 1 mol per 100 g of the specific resin.

- Ionic group -

From the viewpoint that the particles containing a specific resin are preferably formed into water-dispersible resin particles described below, it is preferable that the specific resin used in the present disclosure has an ionic group in the structure.

The ionic group may be an anionic group or a cationic group, but an anionic group is preferable from the viewpoint of ease of introduction.

The anionic group is not particularly limited, but a carboxy group or a sulfo group is preferable, and a sulfo group is more preferable.

The amount of the ionic group is not particularly limited and can be preferably used as long as the amount thereof is set such that the particles containing a specific resin are formed into water-dispersible resin particles. For example, the amount thereof is preferably in a range of 0.001 mol to 1.0 mol and more preferably in a range of 0.01 mol to 0.5 mol per 100 g of the resin contained in the particles containing a specific resin.

[Form of particles containing specific resin]

As the particles containing a specific resin, water-dispersible resin particles are preferable.

In the present disclosure, the water dispersibility indicates a property in which precipitation is not confirmed after a substance is stirred in water at 20° and the solution is allowed to stand at 20°C for 60 minutes.

- Volume average particle diameter -

The volume average particle diameter of the particles containing a specific resin is preferably in a range of 1 nm to 300 nm, more preferably in a range of 3 nm to 200 nm, and still more preferably in a range of 5 nm to 150 nm.

In the present disclosure, the volume average particle diameter is measured using a laser diffraction scattering particle size distribution analyzer. As a measuring device, a particle size distribution measuring device "MICROTRAC MT-3300II" (manufactured by Nikkiso Co., Ltd.) is exemplified.

[Weight-average molecular weight]

The weight-average molecular weight (Mw) of the specific resin is preferably in a range of 1000 to 300000, more preferably in a range of 2000 to 200000, and still more preferably in a range of 5000 to 100000.

In the present disclosure, the weight-average molecular weight is measured according to gel permeation chromatography (GPC) unless otherwise specified. The GPC is performed using HLC-8020GPC (manufactured by Tosho Corporation), three columns of TSKgel (registered trademark) Super Multipore HZ-H (manufactured by Tosho Corporation, 4.6 mmID × 15 cm), and tetrahydrofuran (THF) as an eluent. Further, as the conditions, the GPC is performed at a sample concentration of 0.45% by mass, a flow rate of 0.35 ml/min, a sample injection volume of 10 μl, and a measurement temperature of 40°C using a refractive index (RI) detector. Further, the calibration curve is produced using eight samples of "F-40", "F-20", "F-4", "F-1", "A-5000", "A-2500", "A-1000", and "n-propylbenzene" which are "Standard Samples TSK standard, polystyrene" (manufactured by TOSOH CORPORATION).

[Content of specific resin in particles containing specific resin]

The content of the specific resin in the particles containing a specific resin is preferably 30% by mass or greater, more preferably 50% by mass or greater, still more preferably 70% by mass or greater, and particularly preferably 90% by mass or greater with respect to the total mass of all resin components in the particles containing a specific resin. The upper limit of the content thereof is not particularly limited and may be 100% by mass or less.

[Specific examples]

Specific examples of the particles containing a specific resin include PESRESIN A124GP, PESRESIN A645GH, PESRESIN A615GE, and PESRESIN A520 (all manufactured by Takamatsu Oil & Fat Co., Ltd.), Eastek 1100 and Eastek 1200 (both manufactured by Eastman Chemical Company), PLASCOAT RZ570, PLASCOAT Z687, PLASCOAT Z565, PLASCOAT RZ570, and PLASCOAT Z690 (all manufactured by Goo Chemical Co., Ltd.), VYLONAL MD1200 (manufactured by Toyobo Co., Ltd.), and EM57DOC (manufactured by Daicel FineChem Ltd.).

[Content]

In the pretreatment liquid used in the present disclosure, the content of the particles containing a specific resin is preferably in a range of 1% by mass to 25% by mass, more preferably in a range of 2% by mass to 20% by mass, and still more preferably in a range of 3% by mass to 15% by mass with respect to the total mass of the pretreatment liquid.

<Aggregating agent>

The pretreatment liquid according to the embodiment of the present disclosure contains at least one aggregating agent selected from the group consisting of a polyvalent metal compound, an organic acid or a salt thereof, and a metal complex.
Typically in a case where an aggregating agent which is a low-molecular-weight compound such as a polyvalent metal compound, an organic acid or a salt thereof, or a metal complex is used, it is considered that leakage of the aggregating agent from a non-image area in the printed surface easily occurs compared to a case where an aggregating agent which is a high-molecular weight compound is used.
However, in a case where the pretreatment liquid according to the embodiment of the present disclosure is used, it is assumed that since the pretreatment liquid contains the particles containing a specific resin, leakage of an aggregating agent is suppressed even in a case where the above-described aggregating agent which is a low-molecular-weight compound is used.
Therefore, in a case where printing is performed on an impermeable medium using the pretreatment liquid according to the embodiment of the present disclosure, it is considered that transfer of the component contained in the pretreatment liquid tends to be suppressed.
In the present disclosure, the low-molecular-weight compound indicates a compound having a molecular weight of less than 10000 (the weight-average molecular weight in a case of molecular weight distribution).
It is preferable that the aggregating agent contains an organic acid.
Hereinafter, each compound will be described in detail.

[Polyvalent metal compound]

Examples of the polyvalent metal compound include alkaline earth metals of a group 2 (such as magnesium and calcium) in the periodic table, transition metals of a group 3 (such as lanthanum) in the periodic table, cations of a group 13 (such as aluminum) in the periodic table, and salts of lanthanides (such as neodymium). Suitable examples of salts of these metals include a nitrate, a chloride, and a thiocyanate. Among examples, a calcium salt or magnesium salt of carboxylic acid (such as formic acid, acetic acid, or a benzoate), a calcium salt or magnesium salt of nitric acid, calcium chloride, magnesium chloride, and a calcium salt or magnesium salt of thiocyanic acid are preferable.
Further, it is preferable that at least a part of the polyvalent metal compound is dissociated into polyvalent metal ions and counter ions in the pretreatment liquid.

[Organic acid or salt thereof]

As the organic acid, an organic compound containing an acidic group is exemplified.
Examples of the acidic group include a phosphoric acid group, a phosphonic acid group, a phosphinic acid group, a sulfate group, a sulfo group, a sulfinic acid group, and a carboxy group. From the viewpoint of the aggregation rate of the ink, a phosphoric acid group or a carboxy group is preferable, and a carboxy group is more preferable as the acidic group.
Further, it is preferable that at least a part of the acidic group is dissociated in the pretreatment liquid.
Preferred examples of the organic compound containing a carboxy group include polyacrylic acid, acetic acid, glycolic acid, malonic acid, malic acid (preferably DL-malic acid), maleic acid, ascorbic acid, succinic acid, glutaric acid, fumaric acid, citric acid, tartaric acid, phthalic acid, 4-methylphthalic acid, lactic acid, sulfonic acid, orthophosphoric acid, pyrrolidone carboxylic acid, pyrrone carboxylic acid, pyrrole carboxylic acid, furan carboxylic acid, pyridine carboxylic acid, coumarinic acid, thiophene carboxylic acid, nicotinic acid, derivatives of these compounds, and salts of these. These compounds may be used alone or in combination of two or more kinds thereof.

From the viewpoint of the aggregation rate of the ink, as the organic compound containing a carboxy group, di- or higher valent carboxylic acid (hereinafter, also referred to as polyvalent carboxylic acid) is preferable, and dicarboxylic acid is more preferable.

As the dicarboxylic acid, malonic acid, malic acid, maleic acid, succinic acid, glutaric acid, fumaric acid, tartaric acid, 4-methylphthalic acid, or citric acid is preferable, and malonic acid, malic acid, tartaric acid, or citric acid is more preferable.

It is preferable that the pKa of the organic acid is low.

In this manner, the surface charge of particles such as polymer particles or the pigment stably dispersed in the ink by a weakly acidic functional group such as a carboxy group is reduced by bringing the ink into contact with an organic acidic compound having a lower pKa to degrade the dispersion stability.

It is preferable that the organic acid contained in the pretreatment liquid is a compound which has a low pKa and a high solubility in water and is di- or higher valent and more preferable that the organic acid is a di- or trivalent acidic substance which has a high buffer capacity in a pH region whose pKa is lower than the pKa of the functional group (for example, a carboxy group) that allows the particles to be stably dispersed in the ink.

[Metal complex]

As the metal complex, various metal complexes are commercially available, and a commercially available metal complex may be used in the present disclosure. Further, various organic ligands, particularly various multidentate ligands that are capable of forming metal chelate catalysts are commercially available. Accordingly, a metal complex prepared by combining a commercially available organic ligand with a metal may be used.

Examples of the metal complex include zirconium tetraacetyl acetonate (for example, "ORGATIX ZC-150", manufactured by Matsumoto Fine Chemical Co., Ltd.), zirconium monoacetyl acetonate (for example, "ORGATIX ZC-540", manufactured by Matsumoto Pharmaceutical Manufacture Co., Ltd.), zirconium bisacetyl acetonate (for example, "ORGATIX ZC-550", manufactured by Matsumoto Fine Chemical Co., Ltd.), zirconium monoethyl acetoacetate (for example, "ORGATIX ZC-560", manufactured by Matsumoto Fine Chemical Co., Ltd.), zirconium acetate (for example, "ORGATIX ZC-115", manufactured by Matsumoto Fine Chemical Co., Ltd.), titanium diisopropoxy bis(acetylacetonate) (for example, "ORGATIX TC-100", manufactured by Matsumoto Fine Chemical Co., Ltd.), titanium tetraacetyl acetonate (for example, "ORGATIX TC-401", manufactured by Matsumoto Fine Chemical Co., Ltd.), titanium dioctyloxy bis(octylene glycolate) (for example, "ORGATIX TC-200", manufactured by Matsumoto Fine Chemical Co., Ltd.), titanium diisopropoxy bis(ethylacetoacetate) (for example, "ORGATIX TC-750", manufactured by Matsumoto Fine Chemical Co., Ltd.), zirconium tetraacetyl acetonate (for example, "ORGATIX ZC-700", manufactured by Matsumoto Fine Chemical Co., Ltd.), zirconium tributoxy monoacetyl acetonate (for example, "ORGATIX ZC-540", manufactured by Matsumoto Fine Chemical Co., Ltd.), zirconium monobutoxy acetyl acetonate bis(ethylacetoacetate) (for example, "ORGATIX ZC-570", manufactured by Matsumoto Fine Chemical Co., Ltd.), zirconium dibutoxy bis(ethylacetoacetate) (for example, "ORGATIX ZC-580", manufactured by Matsumoto Fine Chemical Co., Ltd.), aluminum trisacetyl acetonate (for example, "ORGATIX AL-80", manufactured by Matsumoto Fine Chemical Co., Ltd.), titanium lactate ammonium salt (for example, "ORGATIX TC-300", manufactured by Matsumoto Fine Chemical Co., Ltd.), titanium lactate (for example, "ORGATIX TC-310, 315", manufactured by Matsumoto Fine Chemical Co., Ltd.), titanium triethanol aminate (for example, "ORGATIX TC-400", manufactured by Matsumoto Fine Chemical Co., Ltd.), and ORGATIX ZC-126 (manufactured by Matsumoto Fine Chemical Co., Ltd.). Among these, titanium lactate ammonium salt (for example, "ORGATIX TC-300", manufactured by Matsumoto Fine Chemical Co., Ltd.), titanium lactate (for example, "ORGATIX TC-310, 315", manufactured by Matsumoto Fine Chemical Co., Ltd.), titanium triethanol aminate (for example, "ORGATIX TC-400", manufactured by Matsumoto Fine Chemical Co., Ltd.), and ORGATIX ZC-126 (manufactured by Matsumoto Fine Chemical Co., Ltd.) are preferable.

[Cationic polymer]

The pretreatment liquid according to the embodiment of the present disclosure may use, as the aggregating agent, a combination of a cationic polymer described in JP2016-188345A with at least one aggregating agent selected from the group consisting of a polyvalent metal compound, an organic acid or a salt thereof, and a metal complex.

[Content]

The content of the aggregating agent is not particularly limited, but is preferably in a range of 3% by mass to 40% by mass and more preferably in a range of 5% by mass to 30% by mass with respect to the total mass of the pretreatment

**EP 3 647 065 B1**

liquid from the viewpoint of the aggregation rate of the ink.

Further, the mass ratio of the content of the resin particles to the content of the aggregating agent is preferably in a range of 10:1 to 1:1, more preferably in a range of 8:1 to 1:1, and still more preferably in a range of 5:1 to 1:1.

<Water>

The pretreatment liquid contains water.

The content of water is preferably in a range of 50% by mass to 90% by mass and more preferably in a range of 60% by mass to 80% by mass with respect to the total mass of the pretreatment liquid.

<Water-soluble polymer compound>

The pretreatment liquid may contain a water-soluble polymer compound.

The water-soluble polymer compound is not particularly limited, and known water-soluble polymer compounds such as polyvinyl alcohol, polyacrylamide, polyvinylpyrrolidone, and polyethylene glycol can be used.

Further, specific polymer compounds described below and water-soluble polymer compounds described in paragraphs 0026 to 0080 of JP2013-001854A are also suitable as the water-soluble polymer compound.

The weight-average molecular weight of the water-soluble polymer compound is not particularly limited, but can be set to be in a range of 10000 to 100000, preferably in a range of 20000 to 80000, and more preferably in a range of 30000 to 80000.

Further, the content of the water-soluble polymer compound in the pretreatment liquid is not particularly limited, but is preferably in a range of 0.1% by mass to 10% by mass, more preferably in a range of 0.1% by mass to 4% by mass, still more preferably in a range of 0.1% by mass to 2% by mass, and even still more preferably in a range of 0.1% by mass to 1% by mass with respect to the total amount of the pretreatment liquid.

In a case where the content of the water-soluble polymer compound is 0.1% by mass or greater, the spreading of ink droplets can be further promoted. In a case where the content thereof is 10% by mass or less, the thickening of the pretreatment liquid can be further suppressed. Further, in a case where the content of the water-soluble polymer compound is 10% by mass or less, coating unevenness of the pretreatment liquid caused by bubbles in the pretreatment liquid can be further suppressed.

A polymer compound (hereinafter, also referred to as a "specific polymer compound") which has a hydrophilic structural unit containing an ionic group (preferably an anionic group) is preferable as the water-soluble polymer compound.

In this manner, the spreading of ink droplets applied to the impermeable medium can be more promoted so that image roughness is further suppressed.

Examples of the ionic group contained in the specific polymer compound include a carboxy group, a sulfonic acid group a phosphoric acid group, a boronic acid group, an amino group, a quaternary ammonium group, and salts of these. Among these, a carboxy group, a sulfonic acid group, a phosphoric acid group, and salts of these are preferable; a carboxy group, a sulfonic acid group, and salts of these are more preferable; and a sulfonic acid group and a salt thereof are still more preferable.

As a hydrophilic structural unit containing an ionic group (preferably an anionic group), a structural unit derived from a (meth)acrylamide compound having an ionic group (preferably an anionic group) is preferable.

The content of the hydrophilic structural unit containing an ionic group (preferably an anionic group) in the water-soluble polymer compound can be set to be in a range of 10% by mass to 100% by mass and is preferably in a range of 10% by mass to 90% by mass, more preferably in a range of 10% by mass to 70% by mass, still more preferably in a range of 10% by mass to 50% by mass, and particularly preferably in a range of 20% by mass to 40% by mass with respect to the total mass of the water-soluble polymer compound.

It is more preferable that the specific polymer compound contains at least one hydrophilic structural unit containing the above-described ionic group (preferably an anionic group and particularly preferably a sulfonic acid group) and at least one hydrophobic structural unit. Since the specific polymer compound is easily present on the surface of the pretreatment liquid in a case where the specific polymer compound has a hydrophobic structural unit, the spreading of ink droplets applied to the impermeable medium is further promoted so that the image roughness is further suppressed.

As the hydrophobic structural unit, a structural unit derived from (meth)acrylic acid ester (preferably an alkyl ester in which the number of carbon atoms in (meth)acrylic acid is in a range of 1 to 4) is preferable.

The content of the hydrophobic structural unit in the specific polymer compound is in a range of 10% by mass to 90% by mass, preferably in a range of 30% by mass to 90% by mass, more preferably in a range of 50% by mass to 90% by mass, and still more preferably in a range of 60% by mass to 80% by mass with respect to the total mass of the specific polymer compound.

EP 3 647 065 B1

<Water-soluble solvent>

It is preferable that the pretreatment liquid contains at least one water-soluble solvent.

In the present specification, the term "water-soluble" indicates a property in which 5 g or greater (more preferably 10 g or greater) of a substance is dissolved in 100 g of water at 25°C.

As the water-soluble solvent, known solvents can be used without particular limitation.

Examples of the water-soluble solvent include glycols such as glycerin, 1,2,6-hexanetriol, trimethylolpropane, ethylene glycol, propylene glycol, diethylene glycol, triethylene glycol, tetraethylene glycol, pentaethylene glycol, and dipropylene glycol; polyhydric alcohols, for example, alkanediol such as 2-butene-1,4-diol, 2-ethyl-1,3-hexanediol, 2-methyl-2,4-pentanediol, 1,2-octanediol, 1,2-hexanediol, 1,2-pentanediol, or 4-methyl-1,2-pentanediol; and saccharides, sugar alcohols, hyaluronic acids, alkyl alcohols having 1 to 4 carbon atoms, glycol ethers, 2-pyrrolidone, and N-methyl-2-pyrrolidone described in paragraph 0116 of JP2011-042150A.

Among those, from the viewpoint of suppressing transfer of the component contained in the pretreatment liquid, polyalkylene glycol or a derivative thereof is preferable; and at least one selected from diethylene glycol monoalkyl ether, triethylene glycol monoalkyl ether, dipropylene glycol, tripropylene glycol monoalkyl ether, polyoxypropylene glyceryl ether, and polyoxyethylene polyoxypropylene glycol is more preferable.

From the viewpoint of the coating properties, the content of the pretreatment liquid in the water-soluble solvent is preferably in a range of 3% by mass to 20% by mass and more preferably in a range of 5% by mass to 15% by mass with respect to the total content of the pretreatment liquid.

From the viewpoint of the adhesiveness between the base material and the pretreatment liquid according to the embodiment of the present disclosure, it is preferable that the pretreatment liquid does not contain a water-soluble organic solvent having a solubility parameter (SP value) of 13 or less or the content of the water-soluble organic solvent having an SP value of 13 or less is greater than 0% by mass and less than 10% by mass with respect to the total mass of the pretreatment liquid; more preferable that the pretreatment liquid does not contain a water-soluble organic solvent having an SP value of 13 or less or the content of the water-soluble organic solvent having an SP value of 13 or less is greater than 0% by mass and less than 5% by mass with respect to the total mass of the pretreatment liquid; still more preferable that the pretreatment liquid does not contain a water-soluble organic solvent having an SP value of 13 or less or the content of the water-soluble organic solvent having an SP value of 13 or less is greater than 0% by mass and less than 2% by mass with respect to the total mass of the pretreatment liquid; and particularly preferable that the pretreatment liquid does not contain a water-soluble organic solvent having an SP value of 13 or less.

The SP value in the present disclosure is calculated according to the Okitsu method ("Journal of the Adhesion Society of Japan" 29 (5) (1993), written by Toshinao Okitsu). Specifically, the SP value is calculated according to the following equation. Further, $\Delta F$ is a value described in the document.

$$SP\ value\ (\delta) = \Sigma\Delta F\ (Molar\ Attraction\ Constants)/V\ (molar\ volume)$$

Further, the unit of the SP value in the present disclosure is $(cal/cm^3)^{1/2}$.

Examples of the water-soluble organic solvent include isopentyl alcohol (10), 1,3-butylene glycol diacetate (10.1), propylene glycol monomethyl ether (10.2), 1-octanol (10.3), triethylene glycol (10.3), dipropylene glycol monomethyl ether (10.4), cyclopentanone (10.4), diethylene glycol monobutyl ether (10.5), ethyl cellosolve (10.5), 1-butyl alcohol (10.6), N,N-dimethyl acetamide (10.8), 1-pentanol (10.9), diethylene glycol monoethyl ether (10.9), propylene glycol monoethyl ether (10.9), 3-methoxy butanol (10.9), propylene glycol phenyl ether (11.1), 1-butanol (11.4), cyclohexanol (11.4), ethylene glycol monobutyl ether (11.5), isopropyl alcohol (11.5), n-propyl alcohol (11.8), N,N-dimethylformamide (11.9), N-ethylformamide (11.9), benzyl alcohol (12.1), diethylene glycol (12.1), trioxypropylene glycol (12.1), ethanol (12.7), and polyoxypropylene glyceryl ethers (10.6 to 12.9). Further, the numerical value in parentheses of each compound indicates the SP value, and the unit thereof is $(cal/cm^3)^{0.5}$.

<Surfactant>

The pretreatment liquid may contain a surfactant.

The surfactant can be used as a surface tension adjuster or an antifoaming agent. Examples of the surface tension adjuster or the antifoaming agent include a non-ionic surfactant, a cationic surfactant, an anionic surfactant, and a betaine surfactant. Among these, from the viewpoint of the aggregation rate of the ink, a non-ionic surfactant or an anionic surfactant is preferable.

Examples of the surfactant include compounds exemplified as surfactants in pp. 37 and 38 of JP1984-157636A (JP-S59-157636A) and Research Disclosure No. 308119 (1989). Further, other examples of the surfactant include fluorine(fluorinated alkyl)-based surfactants and silicone-based surfactants described in JP2003-322926A, JP2004-325707A, and JP2004-309806A.

11

The content of the surfactant in the pretreatment liquid is not particularly limited, but the content thereof can be set such that the surface tension of the pretreatment liquid reaches preferably 50 mN/m or less, more preferably in a range of 20 mN/m to 50 mN/m, and still more preferably in a range of 30 mN/m to 45 mN/m.

<Other additives>

The pretreatment liquid may contain other components in addition to the above-described components as necessary.

Examples of other components which can be contained in the pretreatment liquid include known additives such as a solid wetting agent, colloidal silica, an inorganic salt, a fading inhibitor, an emulsion stabilizer, a penetration enhancer, an ultraviolet absorbing agent, a preservative, an antibacterial agent, a pH adjuster, a viscosity adjuster, a rust inhibitor, and a chelating agent.

<Physical properties of pretreatment liquid>

From the viewpoint of the aggregation rate of the ink, the pH of the pretreatment liquid at 25°C is preferably in a range of 0.1 to 3.5.

In a case where the pH of the pretreatment liquid is 0.1 or greater, the roughness of the impermeable medium is further decreased and the adhesiveness of the image area is further improved.

In a case where the pH of the pretreatment liquid is 3.5 or less, the aggregation rate is further improved, coalescence of dots (ink dots) caused by the ink on the impermeable medium is further suppressed, and the roughness of the image is further decreased.

The pH (25°C) of the pretreatment liquid is more preferably in a range of 0.2 to 2.0.

From the viewpoint of the aggregation rate of the ink, the viscosity of the pretreatment liquid is preferably in a range of 0.5 mPa·s to 10 mPa·s and more preferably in a range of 1 mPa·s to 5 mPa·s. The viscosity is a value measured using a VISCOMETER TV-22 (manufactured by TOKI SANGYO CO., LTD.) under a temperature condition of 25°C.

The surface tension of the pretreatment liquid at 25°C is preferably 60 mN/m or less, more preferably in a range of 20 mN/m to 50 mN/m, and still more preferably in a range of 30 mN/m to 45 mN/m. In a case where the surface tension of the pretreatment liquid is in the above-described range, the adhesiveness between the impermeable medium and the pretreatment liquid is improved. The surface tension of the pretreatment liquid is measured using an Automatic Surface Tensiometer CBVP-Z (manufactured by Kyowa Interface Science Co., Ltd.) according to a plate method.

(Base material for printing)

It is preferable that the base material for printing according to the embodiment of the present disclosure contains an impermeable medium, a resin, and at least one aggregating agent selected from the group consisting of a polyvalent metal compound, an organic acid or a salt thereof, and a metal complex and comprises a pretreatment layer positioned on the impermeable medium, the glass transition temperature of the pretreatment layer is 30°C or higher, and the water contact angle of the surface of the pretreatment layer is 20° or higher.

It is preferable that the pretreatment layer and the impermeable medium are in direct contact with each other.

The pretreatment layer is obtained, for example, as a dried material of the pretreatment liquid. In the present disclosure, a dried material of a certain composition indicates a material obtained by removing at least a part of volatile components (water, an organic solvent, and the like) contained in the composition. Suitable examples of a production method used for producing the base material for printing according to the embodiment of the present disclosure include the following production method of the base material for printing according to the embodiment of the present disclosure.

The glass transition temperature of the pretreatment layer used in the present disclosure is preferably 30°C or higher. The upper limit of the glass transition temperature thereof is not particularly limited and may be 120°C.

Further, from the viewpoints of suppressing transfer of the component contained in the pretreatment layer and improving the adhesiveness between the pretreatment layer and the impermeable medium, the glass transition temperature thereof is preferably in a range of 30°C to 80°C and more preferably in a range of 35°C to 60°C.

In the present disclosure, the glass transition temperature of the pretreatment layer can be measured using a differential scanning calorimetry (DSC) measurement. The method of acquiring the glass transition temperature is the same as described above, and the glass transition temperature is acquired by performing the DSC measurement using the pretreatment layer itself.

The water contact angle of the surface of the pretreatment layer used in the present disclosure is preferably 20° or greater. The upper limit of the water contact angle thereof is not particularly limited and may be 100°.

Further, from the viewpoints of suppressing transfer of the component contained in the pretreatment layer and improving the adhesiveness between the pretreatment layer and the impermeable medium, the water contact angle thereof is preferably in a range of 20°C to 90°C and more preferably in a range of 30°C to 80°C.

In the present disclosure, the water contact angle of a surface C of the pretreatment layer is measured according to the following method.

The measurement of the contact angle is performed on the surface of the pretreatment layer after 1 minute using a contact angle meter Drop Master DM700 (manufactured by Kyowa Interface Science, Inc.) in conformity with a static method described in JIS R3257:1999. The liquid droplet amount is set to 2 μL.

In the base material for printing according to the embodiment of the present disclosure, it is preferable that the pretreatment layer contains a resin having a glass transition temperature of 30°C or higher and a water contact angle of 20° or greater as the resin. It is preferable that the resin is introduced by the particles containing a specific resin.

The impermeable medium in the base material for printing according to the embodiment of the present disclosure, the particles containing a specific resin in the pretreatment layer, and the aggregating agent each have the same definition as that for the impermeable medium in the pretreatment liquid according to the embodiment of the present disclosure, the particles containing a specific resin, and the aggregating agent, and the preferable aspects thereof are the same as described above.

Further, the base material for printing according to the embodiment of the present disclosure may further contain the water-soluble polymer compound, the surfactant, and other additives contained in the pretreatment liquid according to the embodiment of the present disclosure, in the pretreatment layer.

The expression "contains a material on the impermeable medium" or "contains a material in the pretreatment layer" means that the material may be contained in at least a part of the impermeable medium or the pretreatment layer. Further, in a case where the impermeable medium is a sheet-like medium, the material may be contained on at least one surface thereof.

The content of the particles containing a specific resin on the impermeable medium in the base material for printing according to the embodiment of the present disclosure is preferably in a range of 0.01 g/m$^2$ to 1.0 g/m$^2$ and more preferably in a range of 0.03 g/m$^2$ to 0.5 g/m$^2$.

The content of the aggregating agent on the impermeable medium in the base material for printing according to the embodiment of the present disclosure is preferably in a range of 0.01 g/m$^2$ to 1.0 g/m$^2$ and more preferably in a range of 0.03 g/m$^2$ to 0.5 g/m$^2$.

In a case where the water-soluble polymer compound is contained on the impermeable medium in the base material for printing according to the embodiment of the present disclosure, the content thereof is preferably in a range of 0.01 g/m$^2$ to 1.0 g/m$^2$ and more preferably in a range of 0.03 g/m$^2$ to 0.5 g/m$^2$.

In a case where the surfactant is contained on the impermeable medium in the base material for printing according to the embodiment of the present disclosure, the content thereof is preferably in a range of 1 g/m$^2$ to 0.3 g/m$^2$ and more preferably in a range of 5 g/m$^2$ to 0.1 g/m$^2$.

Further, the mass ratio of the content of the resin particles to the content of the aggregating agent on the impermeable medium in the base material for printing according to the embodiment of the present disclosure is preferably in a range of 10:1 to 1:1, more preferably in a range of 8:1 to 1:1, and still more preferably in a range of 5:1 to 1:1.

(Method of producing base material for printing)

A method of producing the base material for printing according to the embodiment of the present disclosure includes a pretreatment step of applying the pretreatment liquid according to the embodiment of the present disclosure to the impermeable medium.

<Pretreatment step>

[Method of applying pretreatment liquid]

The pretreatment liquid can be applied using a known method such as a coating method, an ink jet method, or an immersion method. The application can be performed according to a known coating method using a bar coater, an extrusion die coater, an air doctor coater, a blade coater, a rod coater, a knife coater, a squeeze coater, or a reserve roll coater. The details of the ink jet method are the same as the details of the ink jet method in an image recording step described below.

As an embodiment of the present disclosure, an aspect in which the pretreatment liquid is applied onto the impermeable medium in order to aggregate the component in the ink in advance before the application of the ink and the ink is applied so as to come into contact with the pretreatment liquid applied onto the impermeable medium to obtain an image is exemplified. In this manner, the ink jet recording is easily performed at a high speed, and a high-quality image is easily obtained.

The amount of the pretreatment liquid to be applied is not particularly limited as long as the pretreatment liquid enables aggregation of the ink, and it is preferable that the amount thereof can be set such that the amount of the pretreatment liquid to be applied after being dried reaches 0.05 g/m$^2$ or greater.

For example, it is preferable that the amount thereof is set such that the amount of the pretreatment liquid after being dried is in a range of 0.05 g/m$^2$ to 1.0 g/m$^2$.

In a case where the amount of the pretreatment liquid after being dried is 0.05 g/m$^2$ or greater, transfer of the component contained in the pretreatment liquid tends to be suppressed. Further, in a case where the amount of the pretreatment liquid after being dried is 1.0 g/m$^2$ or less, the adhesiveness between the impermeable medium and the specific resin becomes excellent, and the image is unlikely to be peeled off.

In the pretreatment step, the base material may be heated before the application of the pretreatment liquid.

The heating temperature may be appropriately set depending on the kind of the base material and the composition of the pretreatment liquid, but the temperature of the base material is preferably in a range of 20°C to 50°C and more preferably in a range of 25°C to 40°C.

<Surface treatment step>

The method of producing the base material for printing according to the embodiment of the present disclosure may further include a step of performing a surface treatment on the impermeable medium (also referred to as a "surface treatment step").

As the surface treatment step, the surface treatments which can be performed on the resin base material described above are exemplified.

(Image recording method)

An image recording method according to a first aspect of the present disclosure includes a pretreatment step of applying the pretreatment liquid according to the embodiment of the present disclosure to the impermeable medium and an image recording step of jetting an ink composition that contains a colorant and water to the surface to which the pretreatment liquid has been applied according to an ink jet method to record an image.

An image recording method according to a second aspect of the present disclosure includes an image recording step of jetting an ink composition that contains a colorant and water to a surface of the base material for printing which contains the resin particles and the aggregating agent according to an ink jet method using the base material for printing according to the embodiment of the present disclosure to record an image.

The pretreatment step in the image recording method according to the first aspect of the present disclosure is the same as the pretreatment step in the method of producing the base material for printing according to the embodiment of the present disclosure, and the preferable aspects thereof are the same as described above.

As the base material for printing used for the image recording method according to the second aspect of the present disclosure, a base material for printing which is produced according to the method of producing the base material for printing according to the embodiment of the present disclosure may be used or the base material for printing according to the embodiment of the present disclosure may be obtained by purchase or the like and then used.

Hereinafter, the image recording step included in the image recording method according to the first aspect of the present disclosure and the image recording step included in the image recording method according to the second aspect of the present disclosure will be described.

<Image recording step>

The image recording method according to the first aspect of the present disclosure includes an image recording step of jetting an ink composition that contains a colorant and water to the surface of the impermeable medium to which the pretreatment liquid has been applied according to an ink jet method to record an image.

The image recording step is a step of applying the ink composition (also simply referred to as an "ink") to the impermeable medium according to an ink jet method.

In the present step, the ink can be selectively applied onto the impermeable medium so that a desired visible image can be formed.

In the image formation according to an ink jet method, a colored image is formed by providing the energy so that an ink is jetted onto a desired impermeable medium. Further, as a preferable ink jet method in the present disclosure, the method described in paragraphs 0093 to 0105 of JP2003-306623A can be employed.

The ink jet method used in the embodiment of the present invention is not particularly limited, and any of known methods such as an electric charge control method of jetting an ink using electrostatic attraction force; a drop-on-demand method (pressure pulse method) using a vibration pressure of a piezoelectric element; an acoustic ink jet system of jetting an ink using a radiation pressure by changing an electric signal into an acoustic beam and radiating the acoustic beam to the ink; and a thermal ink jet (bubble jet (registered trademark)) method of heating an ink to form bubbles and utilizing the generated pressure may be used. As an ink jet method, particularly, an ink jet method, described in JP1979-59936A (JP-S54-59936A), of jetting an ink from a nozzle using an action force caused by a rapid change in volume of the ink after being subjected to an action of thermal energy can be effectively used.

A short serial head is used as the ink jet head, and there are two systems for the ink jet head, which are a shuttle system of performing recording while scanning a head in the width direction of the impermeable medium and a line system of using a line head in which recording elements are aligned in correspondence with the entire area of one side of the impermeable medium. In the line system, image recording can be performed on the entire surface of the impermeable medium by scanning the impermeable medium in a direction intersecting the direction in which the recording elements are aligned. Therefore, a transport system such as a carriage that scans a short head becomes unnecessary. Further, since movement of a carriage and complicated scanning control between the head and the impermeable medium become unnecessary and only the impermeable medium moves, the recording at a higher recording speed compared to the shuttle system can be realized. The image recording method according to the embodiment of the present disclosure can be applied to any of these, but an effect of improving the jetting accuracy and the rub resistance of an image increases in a case where the image recording method is applied to the line system that does not perform a dummy jet.

From the viewpoint of obtaining an image with high definition, the liquid droplet amount of ink jetted from the ink jet head is preferably in a range of 1 pl (pico liter) to 10 pl and more preferably in a range of 1.5 pl to 6 pl. In addition, from the viewpoints of improving the image irregularity and improving connection of continuous gradations, it is also effective that the ink is jetted by combining different amounts of liquid droplets.

[Ink composition]

Hereinafter, the ink composition used in the present disclosure will be described.

The ink composition used in the present disclosure contains a colorant and water, and an aqueous ink composition is preferable as the ink composition. In the present disclosure, the aqueous ink composition indicates an ink composition containing 50% by mass of water with respect to the total mass of the ink.

Further, the content of the organic solvent in the ink composition of the present disclosure is preferably less than 50% by mass and more preferably 40% by mass or less with respect to the total mass of the ink composition.

Further, it is preferable that the ink composition of the present disclosure does not contain a polymerizable compound or the content of the polymerizable compound is greater than 0% by mass and 10% by mass or less and more preferable that the ink composition does not contain a polymerizable compound.

Examples of the polymerizable compound include a cationic polymerizable compound and a radically polymerizable compound.

- Colorant -

The colorant is not particularly limited and a colorant known in the field of the ink jet ink can be used, but an organic pigment or an inorganic pigment is preferable.

Examples of the organic pigment include an azo pigment, a polycyclic pigment, a chelate dye, a nitro pigment, a nitroso pigment, and aniline black. Among these, an azo pigment and a polycyclic pigment are more preferable.

Examples of the inorganic pigment include titanium oxide, iron oxide, calcium carbonate, barium sulfate, aluminum hydroxide, yellow barium, cadmium red, chrome yellow, and carbon black. Among these, carbon black is particularly preferable.

Preferred examples of the colorant include the colorants described in paragraphs 0096 to 0100 of JP2009-241586A.

The content of the colorant is preferably in a range of 1% by mass to 25% by mass, more preferably in a range of 2% by mass to 20% by mass, still more preferably in a range of 5% by mass to 20% by mass, and particularly preferably in a range of 5% by mass to 15% by mass with respect to the total mass of the ink composition.

- Water -

The ink composition contains water.

The content of water is preferably in a range of 50% by mass to 90% by mass and more preferably in a range of 60% by mass to 80% by mass with respect to the total mass of the ink composition.

- Dispersant -

The ink composition used in the present disclosure may contain a dispersant for dispersing the colorant. As the dispersant, any of a polymer dispersant or a low-molecular-weight surfactant-type dispersant may be used. Further, as the polymer dispersant, any of a water-soluble dispersant or a water-insoluble dispersant may be used.

Preferred examples of the dispersant include dispersants described in paragraphs 0080 to 0096 of JP2016-145312A.

The mixing mass ratio between a colorant (P) and a dispersant (s) (p:s) is preferably in a range of 1:0.06 to 1:3, more preferably in a range of 1:0.125 to 1:2, and still more preferably in a range of 1:0.125 to 1:1.5.

- Resin particles -

The ink composition in the present disclosure may contain at least one kind of resin particles. In a case where the ink composition contains resin particles, the fixing property of mainly the ink composition to the recording medium (impermeable medium) and the rub resistance can be improved. Further, the resin particles have a function of fixing the ink composition, that is, the image by being unstably aggregated or dispersed at the time of being contact with the aggregating agent described above and thickening the ink composition. It is preferable that such resin particles are dispersed in water and a water-containing organic solvent.

Preferred examples of the resin particles include the resin particles described in paragraphs 0062 to 0076 of JP2016-188345A.

From the viewpoint of the rub resistance of an image to be obtained, it is preferable that the Tg of the resin particles contained in the ink composition is higher than the Tg of the above-described specific resin.

- Water-soluble organic solvent -

It is preferable that the ink composition used in the present disclosure contains at least one water-soluble organic solvent. The effect of preventing drying or the effect of wetting can be obtained from the water-soluble organic solvent. A water-soluble organic solvent which is used as an anti-drying agent that prevents clogging by adhering and drying the ink in the ink jetting port of the injection nozzle to form an aggregate in order to prevent drying and which has a lower vapor pressure than that of water is preferable for wetting and preventing drying.

In addition, the boiling point of the water-soluble organic solvent at 1 atm (1013.25 hPa) is preferably in a range of 80°C to 300°C and more preferably in a range of 120°C to 250°C.

As the anti-drying agent, a water-soluble organic solvent which has a lower vapor pressure than that of water is preferable. Specific examples of such a water-soluble organic solvent include polyhydric alcohols represented by ethylene glycol, propylene glycol, diethylene glycol, polyethylene glycol, thiodiglycol, dithiodiglycol, 2-methyl-1,3-propanediol, 1,2,6-hexanetriol, an acetylene glycol derivative, glycerin, and trimethylolpropane.

Among these, polyhydric alcohol such as glycerin or diethylene glycol is preferable as the anti-drying agent.

The anti-drying agent may be used alone or in combination of two or more kinds thereof. The content of the anti-drying agent in the ink composition is preferably in a range of 10% to 50% by mass.

The water-soluble organic solvent is used for adjusting the viscosity in addition to the purposes described above. Specific examples of the water-soluble organic solvent which can be used for adjusting the viscosity include alcohols (such as methanol, ethanol, propanol, isopropanol, butanol, isobutanol, sec-butanol, t-butanol, pentanol, hexanol, cyclohexanol, and benzyl alcohol), polyhydric alcohols (such as ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol), glycol derivatives (such as ethylene glycol monomethyl ether, ethylene glycol monoethyl ether, ethylene glycol monobutyl ether, diethylene glycol monomethyl ether, diethylene glycol monobutyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether, and ethylene glycol monophenyl ether), amines (such as ethanolamine, diethanolamine, triethanolamine, N-methyldiethanolamine, N-ethyldiethanolamine, morpholine, N-ethylmorpholine, ethylenediamine, diethylenetriamine, triethylenetetramine, polyethyleneimine, and tetramethylpropylenediamine), and other polar solvents (such as formamide, N,N-dimethylformamide, N,N-dimethylacetamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile, and acetone). In this case, the water-soluble organic solvent may also be used alone or in combination of two or more kinds thereof.

- Other additives -

The ink composition used in the present disclosure can be formed using additives other than the above-described components. Examples of other additives include known additives such as a fading inhibitor, an emulsion stabilizer, a penetration enhancer, an ultraviolet absorbing agent, a preservative, an antibacterial agent, a pH adjuster, a surface tension adjuster, an antifoaming agent, a viscosity adjuster, a dispersant, a dispersion stabilizer, a rust inhibitor, and a chelating agent.

The image recording step in the image recording method according to the second aspect of the present disclosure includes an image recording step of jetting an ink composition that contains a colorant and water to the surface of the base material for printing which contains the particles containing a specific resin and the aggregating agent according to an ink jet method to record an image.

The details of the image recording step in the image recording method according to the second aspect of the present disclosure are the same as the details of the image recording step in the image recording method according to the first aspect of the present disclosure.

<Drying step>

The image recording method according to the first aspect of the present disclosure may include a drying step.

The drying step can be performed at any one or both timings after the pretreatment step and before the image recording step and after the image recording step.

As the method of the drying, drying by heating is preferable.

From the viewpoint of the adhesiveness between the impermeable medium and the pretreatment liquid, it is preferable that the heating temperature of the image is a temperature higher than the Tg of the specific resin contained in the pretreatment liquid.

From the viewpoint of the rub resistance of the image, it is preferable that the heating temperature of the image is a temperature lower than the Tg of the resin particles in a case where the ink composition contains the resin particles.

Further, from the viewpoints of the adhesiveness between the impermeable medium and the pretreatment liquid and the rub resistance of the image, it is preferable that the heating temperature of the image is higher than the Tg of the specific resin contained in the pretreatment liquid and is lower than the Tg of the resin particles contained in the ink composition in a case where the ink composition contains the resin particles.

Examples of the means for performing heating and drying the image include known heating means such as a heater, known air blowing means such as a dryer, and means for combining these.

Examples of the method for performing heating and drying the image include a method of applying heat from a side of a recording medium (impermeable medium) opposite to a surface where the image is formed using a heater or the like, a method of applying warm air or hot air to a surface of the recording medium on which the image is formed, a method of applying heat from a surface of the recording medium on which the image is formed or from a side of a recording medium opposite to a surface where the image is formed using an infrared heater, and a method of combining a plurality of these methods.

The heating temperature of the image at the time of heating and drying is preferably 60°C or higher, more preferably 65°C or higher, and particularly preferably 70°C or higher.

The upper limit of the heating temperature is not particularly limited, and the upper limit thereof may be 100°C and preferably 90°C.

The time of heating and drying the image is not particularly limited, but is preferably in a range of 3 seconds to 60 seconds, more preferably in a range of 5 seconds to 30 seconds, and particularly preferably in a range of 5 seconds to 20 seconds.

Further, the image recording method according to the second aspect of the present disclosure may include a drying step after the image recording step. The details of the drying step are the same as the details of the drying step included in the image recording method according to the first aspect of the present disclosure.

<Ink jet recording device>

An image forming device which can be used for the image recording method according to the embodiment of the present disclosure is not particularly limited, and known image forming devices described in JP2010-083021A, JP2009-234221A, and JP1998175315A (JP-H10-175315A) can be used.

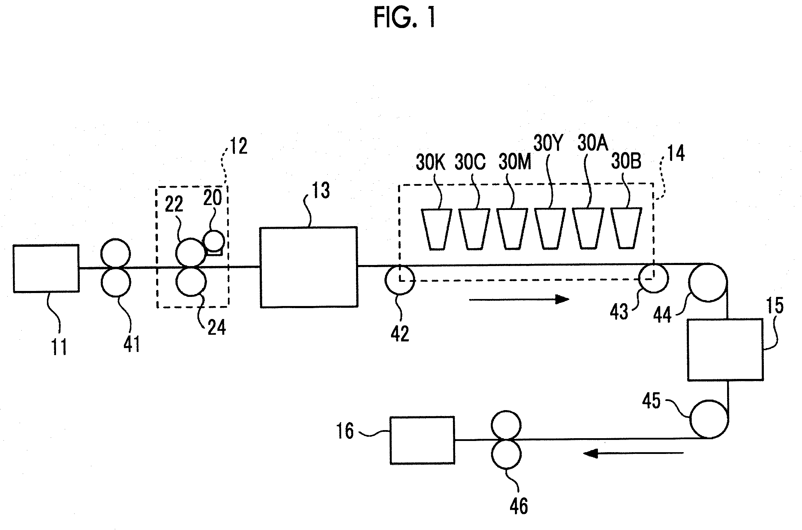

Hereinafter, an example of the image forming device which can be used for the image recording method according to the first aspect of the present disclosure will be described with reference to Fig. 1.

In Fig. 1, the device has means for applying the pretreatment liquid, but the image recording method according to the second aspect of the present disclosure can also be implemented by not using the means or using a device formed by excluding the means.

Fig. 1 is a configuration view schematically illustrating the configuration example of the entire ink jet recording device.

As illustrated in Fig. 1, the ink jet recording device is provided with a pretreatment liquid application unit 12 which comprises an anilox roller 20 and a coating roller 22 brought into contact with the anilox roller 20, as roller materials for sequentially applying the pretreatment liquid from a supply unit 11 of the recording medium (impermeable medium) in a transport direction (the arrow direction in the figure); a pretreatment liquid drying zone 13 which comprises heating means (not illustrated) for drying the applied pretreatment liquid; an ink jetting unit 14 which jets various inks; and an ink drying zone 15 where the jetted ink is dried.

The recording medium supplied to this ink jet recording device is accumulated in an accumulation unit after sequentially being sent to the pretreatment liquid application unit 12, the pretreatment liquid drying zone 13, the ink jetting unit 14, and the ink drying zone 15 by transport rollers 41, 42, 43, 44, 45, and 46 from the supply unit 11 such as a supply unit that supplies the recording medium from a case filled with the recording medium or a supply unit that supplies the recording medium from a roll formed by the recording medium being wound in the form of a roll. In the accumulation unit 16, the recording medium may be wound in the form of a roll. As the method for carrying out transportation, a drum transport system using a drum-like member, a belt transport system, or a stage transport system using a stage may be employed in addition to the method of carrying out transport using a transport roller.

Among the plurality of arranged transport rollers 41, 42, 43, 44, 45, and 46, at least one roller can be formed into a driving roller to which the power of a motor (not illustrated) has been transmitted. The recording medium is transported in a predetermined direction by a predetermined transportation amount by rotating the driving roller rotated by the motor at a constant speed.

The pretreatment liquid application unit 12 is provided with the anilox roller 20 disposed by being partially immersed in a storage tray in which the pretreatment liquid is stored and the coating roller 22 brought into contact with the anilox roller 20. The anilox roller 20 is a roller material for supplying a predetermined amount of the pretreatment liquid to the coating roller 22 disposed by facing the recording surface of the recording medium.
The recording medium is uniformly coated with the pretreatment liquid by the coating roller 22 to which an appropriate amount of the pretreatment liquid has been supplied from the anilox roller 20.

The coating roller 22 is configured so as to transport the recording medium in a pair with an opposing roller 24, and the recording medium passes between the coating roller 22 and the opposing roller 24 and is sent to the pretreatment liquid drying zone 13.

The pretreatment liquid drying zone 13 is disposed on a downstream side of the pretreatment liquid application unit 12 in the recording medium transport direction. The pretreatment liquid drying zone 13 can be configured using known heating means such as a heater, air blowing means for blowing air such as a dryer, or means for combining these. Examples of the heating means include a method of installing a heating element such as a heater on a side (for example, below a transport mechanism that carries and transports the recording medium in a case of automatically transporting the recording medium) of the recording medium opposite to the surface to which the pretreatment liquid has been applied, a method of applying warm air or hot air to the surface of the recording medium to which the pretreatment liquid has been applied, and a heating method of using an infrared heater, and the heating may be carried out by combining a plurality of these methods.

Further, since the surface temperature of the recording medium changes depending on the kind (the material, the thickness, or the like) of the recording medium or the environmental temperature, it is preferable that the pretreatment liquid is applied while the temperature is controlled by providing a measuring unit that measures the surface temperature of the recording medium and a control mechanism that feeds back the value of the surface temperature of the recording medium measured by the measuring unit to a heat control unit. As the measuring unit that measures the surface temperature of the recording medium, a contact or non-contact type thermometer is preferable.

Further, the solvent may be removed using a solvent removal roller. As another aspect, a system of eliminating an excess solvent from the recording medium using an air knife is also used.

The ink jetting unit 14 is disposed on a downstream side of the pretreatment liquid drying zone 13 in the recording medium transport direction. In the ink jetting unit 14, recording heads (ink jet heads) 30K, 30C, 30M, 30Y, 30A, and 30B that are respectively connected to ink storage portions storing inks with respective colors, which are black (K), cyan (C), magenta (M), yellow (Y), a special color ink (A), and a special color ink (B) are arranged. The respective ink storage portions (not illustrated) are configured such that the ink containing pigments corresponding to each hue, the resin particles, the water-soluble solvent, and water is stored and the ink is supplied to respective ink jet heads 30K, 30C, 30M, 30Y, 30A, and 30B during image recording as necessary.

Examples of the special color ink (A) and the special color ink (B) include white ink, orange ink, green ink, purple ink, light cyan ink, and light magenta ink.

In the ink jet recording device according to the present disclosure, the ink jet heads 30A and 30B may not be provided. Further, the ink jet recording device may comprise other special color ink jet heads in addition to the ink jet heads 30A and 30B.

Further, it is described that the ink jet heads 30A and 30B are positioned behind the yellow (Y) ink jet head 30Y in Fig. 1 for convenience, but the positions thereof are not particularly limited and may be appropriately set in consideration of the brightness or the like of the special color inks.

For example, an aspect in which the ink jet heads 30A and 30B are positioned between the yellow ink jet head 30Y and the magenta ink jet head 30M or an aspect in which the ink jet heads 30A and 30B are positioned between the magenta ink jet head 30M and the cyan ink jet head 30C is considered.

Further, it is preferable that the ink jet head 30B is a white ink jet head.

The ink jet heads 30K, 30C, 30M, 30Y, 30A, and 30B jet inks corresponding to each image from jet nozzles arranged to face the recording surface of the recording medium.
In this manner, each color ink is applied to the recording surface of the recording medium, and thus a color image is recorded.

The ink jet heads 30K, 30C, 30M, 30Y, 30A, and 30B are all full line heads in which a plurality of jet ports (nozzles) are aligned over the maximum recording width of an image to be recorded on the recording medium. The image recording can be performed on the recording medium at a higher speed compared to a serial type head in which recording is performed while reciprocating a short shuttle head in the width direction (a direction orthogonal to the transport direction in the recording medium transport surface) of the recording medium. In the present disclosure, any recording system, for example, a system that enables serial type recording or recording at a relatively high speed, such as a single pass system of forming one line by performing scanning once may be employed. According to the image recording method according to the embodiment of the present disclosure, a high-quality image with excellent reproducibility can be obtained even with the single pass system.

Here, the ink jet heads 30K, 30C, 30M, 30Y, 30A, and 30B all have the same structure.

It is preferable that the amount of the pretreatment liquid to be applied and the amount of the ink to be applied are adjusted as necessary. For example, the amount of the pretreatment liquid to be applied may be changed in order to adjust the physical properties such as the viscoelasticity and the like of the aggregate obtained by mixing the pretreatment liquid and the ink, depending on the recording medium.

The ink drying zone 15 is disposed on a downstream side of the ink jetting unit 14 in the recording medium transport direction. The ink drying zone 15 can be configured in the same manner as the pretreatment liquid drying zone 13.

Further, heating means for performing a heat treatment on the recording medium can be disposed on the transport from the supply unit 11 to the accumulation unit 16 of the ink jet recording device. For example, drying and fixing can be effectively performed by disposing the heating means at a desired position such as on the upstream side of the pretreatment liquid drying zone 13 or between the ink jetting unit 14 and the ink drying zone 15 so that the recording medium is heated to a desired temperature.

(Ink set)

An ink set according to a first aspect of the present disclosure is an ink set which contains an ink composition containing a colorant and water and the pretreatment liquid for impermeable medium printing according to the embodiment of the present disclosure.

The ink composition in the ink set according to the first aspect of the present disclosure has the same definition as that for the ink composition used for the image recording method according to the embodiment of the present disclosure, and the preferable aspects thereof are the same as described above.

An ink set according to a second aspect of the present disclosure contains an ink composition which contains a colorant and water, and a pretreatment liquid which contains resin particles having a glass transition temperature of 30°C or higher and a water contact angle of 20° or greater, at least one aggregating agent selected from the group consisting of a polyvalent metal compound, an organic acid or a salt thereof, and a metal complex, and water, in which the pretreatment liquid does not contain a water-soluble organic solvent having a solubility parameter of 13 or less or the content of the water-soluble organic solvent having a solubility parameter of 13 or less is greater than 0% by mass and less than 10% by mass.

The ink composition in the ink set according to the second aspect of the present disclosure has the same definition as that for the ink composition used for the image recording method according to the embodiment of the present disclosure, and the preferable aspects thereof are the same as described above.

The pretreatment liquid in the ink set according to the second aspect of the present disclosure does not contain a water-soluble organic solvent having a solubility parameter of 13 or less or the content of the water-soluble organic solvent having a solubility parameter of 13 or less is greater than 0% by mass and less than 10% by mass, and the pretreatment liquid has the same definition as that for the pretreatment liquid used for the image recording method according to the embodiment of the present disclosure except that the applications thereof are not limited to impermeable medium printing, and the preferable aspects thereof are the same as described above.

The details of the water-soluble organic solvent having a solubility parameter of 13 or less are the same as the details of the water-soluble organic solvent having a solubility parameter of 13 or less in the pretreatment liquid used for the image recording method according to the embodiment of the present disclosure, and the preferable aspects thereof are the same as described above.

EXAMPLES

Hereinafter, the present invention will be described in more detail based on examples, but the present invention is not limited to the following examples unless the gist thereof is overstepped. Further, "parts" and "%" are on a mass basis unless otherwise specified.

(Preparation of pretreatment liquid and ink composition)

<Preparation of pretreatment liquid>

Respective components were mixed based on the compositions listed in Table 1 to prepare pretreatment liquids 1 to 17 and comparative pretreatment liquids 1 to 8 in each example and each comparative example.

In Table 1, the amount (% by mass) of each component to be added indicates the amount of the solid content in each component, and ion exchange water was added to the mixture as a component other than the components listed in Table 1 such that the total amount of the mixture reached 100% by mass.

Further, the glass transition temperature (Tg) and the contact angle of the specific resin contained in the particles containing a specific resin were measured according to the above-described method, and the results thereof are listed in Table 1.

In Table 1, "-" in the columns of "water-soluble organic solvent having SP value of 13 or less" indicates that the corresponding solvent was not added.

Further, the description in the columns of "mass ratio (particles containing specific resin:aggregating agent)" in Table 1 indicates the mass ratio between the content of the particles containing a specific resin and the content of the aggregating agent (particles containing specific resin:aggregating agent).

[Table 1]

| | | Particles containing specific resin | | | | Aggregating agent | | Mass ratio (particles containing specific resin:aggregating agent) | Water-soluble organic solvent having SP value of greater than 13 | | Water-soluble organic solvent having SP value of 13 or less | | Antifoaming agent | |
|---|---|---|---|---|---|---|---|---|---|---|---|---|---|---|
| | | Type | Tg (°C) | Contact angle (°) | Addition amount (% by mass) | Type | Addition amount (% by mass) | | Type | Addition amount (% by mass) | Type | Addition amount (% by mass) | Type | Addition amount (% by mass) |
| Pretreatment liquid | 1 | PESRESIN A124GP | 55 | 40 | 10 | Malonic acid | 5 | 2:1 | PG | 10 | - | - | TSA-739 | 0.01 |
| | 2 | Eastek1100 | 55 | 30 | 10 | Malonic acid | 5 | 2:1 | PG | 10 | - | - | TSA-739 | 0.01 |
| | 3 | Eastek1200 | 63 | 33 | 10 | Malonic acid | 5 | 2:1 | PG | 10 | - | - | TSA-739 | 0.01 |
| | 4 | PLASCOAT Z687 | 110 | 38 | 10 | Malonic acid | 5 | 2:1 | PG | 10 | - | - | TSA-739 | 0.01 |
| | 5 | PLASCOAT Z565 | 64 | 43 | 10 | Malonic acid | 5 | 2:1 | PG | 10 | - | - | TSA-739 | 0.01 |
| | 6 | PLASCOAT rz570 | 60 | 21 | 10 | Malonic acid | 5 | 2:1 | PG | 10 | - | - | TSA-739 | 0.01 |
| | 7 | PLASCOAT Z690 | 110 | 39 | 10 | Malonic acid | 5 | 2:1 | PG | 10 | - | - | TSA-739 | 0.01 |
| | 8 | PESRESIN A645GH | 55 | 29 | 10 | Malonic acid | 5 | 2:1 | PG | 10 | - | - | TS-A-739 | 0.01 |
| | 9 | MD1200 | 67 | 64 | 10 | Malonic acid | 5 | 2:1 | PG | 10 | - | - | TSA-739 | 0.01 |
| | 10 | EM57DOC | 34 | 28 | 10 | Malonic acid | 5 | 2:1 | PG | 10 | - | - | TSA-739 | 0.01 |
| | 11 | P-1 | 94 | 28 | 10 | Malonic acid | 5 | 2:1 | PG | 10 | - | - | TSA-739 | 0.01 |
| | 12 | Eastek1100 | 55 | 30 | 10 | Acetic acid | 5 | 2:1 | PG | 10 | - | - | TS-A-739 | 0.01 |

EP 3 647 065 B1

(continued)

| | Particles containing specific resin | | | | Aggregating agent | | Mass ratio (particles containing specific resin:aggregating agent) | Water-soluble organic solvent having SP value of greater than 13 | | Water-soluble organic solvent having SP value of 13 or less | | Antifoaming agent | |
|---|---|---|---|---|---|---|---|---|---|---|---|---|---|
| | Type | Tg (°C) | Contact angle (°) | Addition amount (% by mass) | Type | Addition amount (% by mass) | | Type | Addition amount (% by mass) | Type | Addition amount (% by mass) | Type | Addition amount (% by mass) |
| 13 | Eastek 1100 | 55 | 30 | 10 | $CaCl_2$ | 5 | 2:1 | PG | 10 | - | - | TSA-739 | 0.01 |
| 14 | Eastek1100 | 55 | 30 | 10 | TC-310 | 5 | 2:1 | PG | 10 | - | - | TSA-739 | 0.01 |
| 15 | Eastek1100 | 55 | 30 | 20 | Malonic acid | 1.3 | 15:1 | PG | 10 | - | - | TSA-739 | 0.01 |
| 16 | Eastek1100 | 55 | 30 | 3 | Malonic acid | 6 | 1:2 | PG | 10 | - | - | TSA-739 | 0.01 |
| 17 | Eastek1100 | 55 | 30 | 10 | Malonic acid | 5 | 2:1 | PG | 10 | EGB | 15 | TS-A-739 | 0.01 |

| | | Particles containing specific resin | | | | Aggregating agent | | Mass ratio (particles containing specific resin:aggregating agent) | Water-soluble organic solvent having SP value of greater than 13 | | Water-soluble organic solvent having SP value of 13 or less | | Antifoaming agent | |
|---|---|---|---|---|---|---|---|---|---|---|---|---|---|---|
| | | Type | Tg (°C) | Contact angle (°) | Addition amount (% by mass) | Type | Addition amount (% by mass) | | Type | Addition amount (% by mass) | Type | Addition amount (% by mass) | Type | Addition amount (% by mass) |
| Comparative pretreatment liquid | 1 | PLASCOAT Z221 | 8 | 18 | 10 | Malonic acid | 5 | 2:1 | PG | 10 | - | - | TSA-739 | 0.01 |
| | 2 | PLASCOAT Z446 | 47 | 18 | 10 | Malonic acid | 5 | 2:1 | PG | 10 | - | - | TSA-739 | 0.01 |
| | 3 | PLASCOAT Z3310 | -20 | 32 | 10 | Malonic acid | 5 | 2:1 | PG | 10 | - | - | TSA-739 | 0.01 |
| | 4 | MD1480 | 20 | 13 | 10 | Malonic acid | 5 | 2:1 | PG | 10 | - | - | TSA-739 | 0.01 |
| | 5 | MD1930 | -10 | 24 | 10 | Malonic acid | 5 | 2:1 | PG | 10 | - | - | TSA-739 | 0.01 |
| | 6 | Eastek1100 | 55 | 30 | 10 | None | - | - | PG | 10 | - | - | TSA-739 | 0.01 |
| | 7 | P-2 | 70 | 15 | 10 | Malonic acid | 5 | 2:1 | PG | 10 | - | - | TSA-739 | 0.01 |
| | 8 | SF650 | -17 | 18 | 10 | Malonic acid | 5 | 2:1 | PG | 10 | - | - | TSA-739 | 0.01 |

The pretreatment liquids 6 and 9 are pretreatment liquids not according to the present invention.

The details of the abbreviations listed in Table 1 are as follows.

[Particles containing specific resin]

· PESRESIN A124GP (manufactured by Takamatsu Oil & Fat Co., Ltd., polyester resin, volume average particle diameter of 85 nm)

· Eastek 1100 (manufactured by Eastman Chemical Company, polyester resin, volume average particle diameter of 30 nm)

· Eastek 1200 (manufactured by Eastman Chemical Company, polyester resin, volume average particle diameter of 30 nm)

· PLASCOAT Z687 (manufactured by Goo Chemical Co., Ltd., polyester resin, volume average particle diameter of 30 nm)

· PLASCOAT Z565 (manufactured by Goo Chemical Co., Ltd., polyester resin, volume average particle diameter of 30 nm)

· PLASCOAT RZ570 (manufactured by Goo Chemical Co., Ltd., polyester resin, volume average particle diameter of 25 nm)

· PLASCOAT Z690 (manufactured by Goo Chemical Co., Ltd., polyester resin, volume average particle diameter of 35 nm)

· PESRESIN A645GH (manufactured by Takamatsu Oil & Fat Co., Ltd., polyester resin, volume average particle diameter of 35 nm)

·MD1200 (VYLONAL MD1200, manufactured by Toyobo Co., Ltd., polyester resin, volume average particle diameter of 100 nm)

· EM57DOC (manufactured by Daicel FineChem Ltd., acrylic resin, volume average particle diameter of 70 nm)

· P-1 (resin particles P-1 obtained by the following synthesis method, acrylic resin, volume average particle diameter of 60 nm)

· PLASCOAT Z221 (manufactured by Goo Chemical Co., Ltd., polyester resin, volume average particle diameter of 15 nm)

· PLASCOAT Z446 (manufactured by Goo Chemical Co., Ltd., polyester resin, volume average particle diameter of 15 nm)

· PLASCOAT Z3310 (manufactured by Goo Chemical Co., Ltd., polyester resin, volume average particle diameter of 30 nm)

·MD1480 (VYLONAL MD1480, manufactured by Toyobo Co., Ltd., polyester resin, volume average particle diameter of 100 nm)

·MD1930 (VYLONAL MD1930, manufactured by Toyobo Co., Ltd., polyester resin, volume average particle diameter of 100 nm)

· P-2 (resin particles P-2 obtained by the following synthesis method, acrylic resin, volume average particle diameter of 60 nm)

· SF650 (SUPERFLEX 650, manufactured by DKS Co., Ltd., polyurethane resin, volume average particle diameter of 15 nm)

(Synthesis of resin particles P-1)

2 g of sodium dodecyl benzene sulfonate (62 mass% aqueous solution, manufactured by Tokyo Chemical Industry Co., Ltd.) and 586 g of water were added to a 2000 mL three-neck flask provided with a cooling pipe, and the solution was heated to 90°C in a nitrogen atmosphere. A solution A obtained by dissolving 40.2 g of a 50 mass% aqueous solution of sodium acrylamide-2-propane sulfonate (manufactured by Sigma-Aldrich Co., LLC) in 60 g of water, a solution B obtained by mixing 43.9 g of 2-hydroxyethyl methacrylate (manufactured by Tokyo Chemical Industry Co., Ltd.), 118.9 g of styrene (manufactured by Wako Pure Chemical Industries, Ltd.), and 0.84 g of 1-dodecanethiol (manufactured by Tokyo Chemical Industry Co., Ltd.), and a solution C obtained by dissolving 10.1 g of sodium sulfite (manufactured by Wako Pure Chemical Industries, Ltd.) in 55 g of water were added dropwise to the heated mixed solution in the three-neck flask for 6 hours. After dropwise addition, the mixed solution was allowed to react for 3 hours, thereby synthesizing 913 g of a water dispersion liquid containing water-insoluble resin particles (the amount of the solid content of the water-insoluble resin particles: 20.2% by mass).

The volume average particle diameter of the water-insoluble resin particles in the water dispersion liquid was 50 nm. Further, the weight-average molecular weight of the water-insoluble resin in the water-insoluble resin particles was

## EP 3 647 065 B1

38000.

(Synthesis of resin particles P-2)

2 parts by mass of dodecyl benzene sulfonic acid and 0.5 parts by mass of sodium dodecyl benzene sulfonate as surfactants, and 100.0 parts by mass of ion exchange water were added to a flask provided with a stirrer, a nitrogen introduction pipe, a reflux cooling device, and a thermometer.

Thereafter, the solution was heated to 90°C in a nitrogen atmosphere while being stirred, a solution obtained by mixing 2 parts by mass of dodecyl benzene sulfonic acid, 0.5 parts by mass of sodium dodecyl benzene sulfonate, 71.0 parts by mass of methyl methacrylate, 6.0 parts by mass of 2-ethylhexyl acrylate, 18.0 parts by mass of 2-acrylamide-2-methylpropanesulfonic acid, and 100 parts by mass of ion exchange water and a liquid obtained by dissolving 20.0 parts by mass of ion exchange water in 1.0 parts by mass of potassium persulfate were respectively added dropwise to the flask for 3 hours. Subsequently, the solution was stirred for 2 hours, and an appropriate amount of ion exchange water was added thereto, thereby obtaining a resin particle dispersion liquid containing resin particles P-2 with a solid content of 25.0% by mass.

[Aggregating agent]

· Malonic acid (manufactured by Wako Pure Chemical Industries, Ltd.)
· Acetic acid (manufactured by Wako Pure Chemical Industries, Ltd.)
· $CaCl_2$ (manufactured by Wako Pure Chemical Industries, Ltd.)
· TC-310: ORGATIX TC-310, manufactured by Matsumoto Fine Chemical Co., Ltd., titanium lactate)

[Water-soluble organic solvent having SP value of greater than 13]

· PG: propylene glycol (manufactured by Wako Pure Chemical Industries, Ltd., SP value = 17.2 $(cal/cm^3)^{1/2}$)

[Water-soluble organic solvent having SP value of 13 or less]

· EGB: diethylene glycol monobutyl ether (manufactured by Tokyo Chemical Industry Co., Ltd., SP value = 10.5 $(cal/cm^3)^{1/2}$)

[Antifoaming agent]

· TSA-739: manufactured by Momentive Performance Materials Japan LLC, TSA-739 (15%), emulsion type silicon antifoaming agent

Further, the content "0.01%" of the antifoaming agent listed in Table 1 indicates 0.01% by mass as the amount of the solid content of the antifoaming agent.

<Preparation of ink composition>

Respective components described in the section of "composition of magenta ink" below were mixed to prepare magenta ink.

Further, respective components described in the section of "composition of cyan ink" below were mixed to prepare cyan ink.

<Composition of magenta ink>

· Projet Magenta APD1000 (manufactured by FUJIFILM Imaging Colorants Inc., magenta pigment dispersion liquid, pigment concentration: 14%): 30% by mass
· Propylene glycol (PG): 20.0% by mass
· OLFINE E1010 (surfactant, manufactured by Nissan Chemical Co., Ltd.): 1.0% by mass
· Polymer particles B-01 (resin particles) shown below: 8% by mass
· Ion exchange water: remaining amount set such that the total amount of the composition was 100% by mass

<Composition of cyan ink>

· · Projet Cyan APD1000 (manufactured by FUJIFILM Imaging Colorants Inc., cyan pigment dispersion liquid, pigment concentration: 12%): 20% by mass
· Propylene glycol (PG: water-soluble solvent): 20.0% by mass
· OLFINE E1010 (surfactant, manufactured by Nissan Chemical Co., Ltd.): 1.0% by mass
· Polymer particles B-01 (resin particles) shown below: 8% by mass
· Ion exchange water: remaining amount set such that the total amount of the composition was 100% by mass

[Synthesis of polymer particles B-01]

Polymer particles B-01 were produced in the following manner.

A 2 L three-neck flask provided with a stirrer, a thermometer, a reflux cooling pipe, and a nitrogen gas introduction pipe was charged with 560.0 g of methyl ethyl ketone, and the solution was heated to 87°C. Next, a mixed solution formed of 220.4 g of methyl methacrylate, 301.6 g of isobornyl methacrylate, 58.0 g of methacrylic acid, 108 g of methyl ethyl ketone, and 2.32 g of "V-601" (polymerization initiator, manufactured by Wako Pure Chemical Industries, Ltd., dimethyl 2,2'-azobis(2-methyl propionate)) was added dropwise to the methyl ethyl ketone in the reaction container at a constant speed such that the dropwise addition was completed for 2 hours while the reflux state in the reaction container was maintained (hereinafter, the reflux state was maintained until the reaction was completed). After completion of the dropwise addition, the solution was stirred for 1 hour, and the operation of the following step (1) was performed on the solution after being stirred for 1 hour.

Step (1) ··· A solution formed of 1.16 g of "V-601" and 6.4 g of methyl ethyl ketone was added to the solution, and the solution was stirred for 2 hours.

Next, the operation of the step (1) was repeatedly performed four times, a solution formed of 1.16 g of "V-601" and 6.4 g of methyl ethyl ketone was added to the solution, and the resulting solution was stirred for 3 hours (the operation carried out so far is referred to as the "reaction").

After completion of the reaction, the temperature of the solution was decreased to 65°C, 163.0 g of isopropanol was added to the solution, and the solution was allowed to be naturally cooled, thereby obtaining a polymerization solution (concentration of solid contents: 41.0%) containing a copolymer of methyl methacrylate, isobornyl methacrylate, and methacrylic acid (= 38/52/10 [mass ratio]).

The weight-average molecular weight (Mw) of the copolymer was 63000, and the acid value thereof was 65.1 (mgKOH/g).

Next, 317.3 g (concentration of solid contents: 41.0%) of the obtained polymerization solution was weighed, 46.4 g of isopropanol, 1.65 g of a 20% maleic anhydride aqueous solution (water-soluble acidic compound, corresponding to the amount of 0.3% as maleic acid with respect to the copolymer), and 40.77 g of a 2 mol/L NaOH aqueous solution were added to the solution, and the temperature of the liquid in the reaction container was increased to 70°C.

Next, 380 g of distilled water was added dropwise to the solution, which had been heated to 70°C, at a speed of 10 mL/min, and water dispersion was performed (dispersion step).

Thereafter, a total amount of 287.0 g of isopropanol, methyl ethyl ketone, and distilled water was distilled off by maintaining the temperature of the liquid in the reaction container at 70°C for 1.5 hours under reduced pressure (solvent removal step). 0.278 g (440 ppm as benzisothiazolin-3-one as the solid content in the polymer) of PROXEL GXL (S) (manufactured by Arch Chemicals, Inc.) was added to the obtained solution.

The obtained liquid was filtered using a filter having a mesh diameter of 1 $\mu$m, and the filtrate was collected, thereby obtaining an aqueous dispersion containing self-dispersing polymer particles B-01 whose concentration of solid contents was 26.5%.

(Evaluation)

<Evaluation of transfer (blocking) of component contained in pretreatment liquid>

In each example and each comparative example, the resin base material (width of 500 mm, length of 2000 m) listed in Table 2 was transported at 500 mm/sec, coated with the pretreatment liquid listed in Table 2 so as to have a liquid coating amount of approximately 1.7 g/m$^2$ using a wire bar coater, dried with warm air at 80°C for 20 seconds, wound in the form of a roll such that the surface pressure was set to 50 kPa, and allowed to stand at room temperature (25°C) for 1 day. Thereafter, the resin base material was unwound, the presence of transfer in the following A4-sized sheet which had been cut was visually confirmed, and the transfer amount was evaluated according to the following measuring method.

Specifically, an A4-sized rectangular region (29.7 cm in the length direction of the resin base material, and 21 cm in the width direction of the resin base material) was cut at a position of 1000 m from the end portion of the wound resin base material in the length direction, the transfer amount of the component contained in the pretreatment liquid in the region was measured according to the following method, and the arithmetic average value of the transfer amount was calculated.

The cut position in the length direction was set to be the center of the A4-sized region at a position of 1000 m described above in the length direction.

The cut position in the width direction was set such that the center of the cut A4-sized region in the width direction became the center of the resin base material in the width direction.

[Method of measuring transfer amount]

The measurement was performed using MigraCell (registered trademark) MC150 (manufactured by FABES Forschungs-GmbH).

Specifically, the surface of the resin base material opposite to the surface coated with the pretreatment liquid in the above-described cut rectangular region was set to be an extraction surface in MC150, 20 mL of a solvent (methanol/-water = 1:1 (volume ratio)) was added thereof such that the surface thereof was covered, and the resin base material was allowed to stand for 1 day. The set position was set to a position where the center of the rectangular region and the center of the extraction region in MC150 visually overlapped each other.

After the resin base material was allowed to stand, the extraction amount (transfer amount, mg/dm$^2$) per unit area of the resin base material was calculated by dividing the mass of the dried material of the solvent after being taken out and dried by the extraction are (2.0 dm$^2$).

[Evaluation standards]

The evaluation standards are formed of the following five ranks 1 to 5 described below, and the evaluation results are listed in Table 2.

> 5: Transfer was not able to be visually confirmed, and the transfer amount was 0.01 mg/dm$^2$ or less.
> 4: Transfer was not able to be visually confirmed, and the transfer amount was greater than 0.01 mg/dm$^2$ and 0.5 mg/dm$^2$ or less.
> 3: Transfer was not able to be visually confirmed, and the transfer amount was greater than 0.5 mg/dm$^2$ and 5 mg/dm$^2$ or less.
> 2: Transferred materials were able to be partially visually confirmed.
> 1: Transferred materials were able to be visually confirmed over the entire surface.

<Evaluation of adhesiveness>

In each example and each comparative example, the resin base material listed in Table 2 was transported at 635 mm/sec, coated with the pretreatment liquid listed in Table 2 so as to have a liquid coating amount of approximately 1.7 g/m$^2$ using a wire bar coater, and dried with warm air at 50°C for 2 seconds immediately after the coating. Thereafter, a blue (cyan ink + magenta ink) color solid image was printed using the prepared cyan ink and magenta ink described above under the following image recording conditions. Immediately after the printing, the image dried on a hot plate at 80°C for 30 seconds was peeled off using Sellotape (registered trademark, No. 405, manufactured by Nichiban Co., Ltd., width of 12 mm), and the degree of the peeling was visually evaluated. The (cyan + magenta) color solid image was printed. Immediately after the printing, the solid image was dried on a hot plate at 80°C for 30 seconds to form an image.

The adhesiveness of the image was evaluated by attaching Sellotape (registered trademark, No. 405, manufactured by Nichiban Co., Ltd., width of 12 mm, hereinafter, also simply referred to as "tape") to the obtained image and peeling the tape off from the image. It can be said that the peeling of the image is suppressed as the evaluation results for the adhesiveness are excellent. The evaluation results are listed in Table 2.

Specifically, the tape was attached according to the following method.

The tape was taken out at a constant speed and cut into small pieces with a length of approximately 75 mm.

The tape was superimposed with the image, and a region with a width of 12 mm and a length of 25 mm at the center of the tape which had been cut into small pieces was attached using a finger.

The tape was firmly rubbed with the fingertip in order to appropriately bring the tape into contact with the coated film.

The end of the tape was grabbed at an angle as close to 60° as possible in 5 minutes after attachment of the tape, and the tape was securely separated within 0.5 to 1.0 seconds.

[Image recording conditions]

· Head: A head in which four colors of 1200 dpi (dot per inch, 1 inch indicates 2.54 cm)/20-inch width piezo full line heads were disposed was used.
· Jet liquid droplet amount: Each amount was set to 2.4 pL.
· Driving frequency: 30 kHz (base material transport speed of 635 mm/sec)

[Evaluation standards]

5: Adhesive materials were not found on the tape side.
4: Some colored adhesive materials were found on the tape side, but peeling was not visually confirmed on the image side.
3: Some colored adhesive materials were found on the tape side, and peeling was slightly visually confirmed on the image side.
2: Colored adhesive materials were found on the tape side, and the ink partially remained on the image side.
1: Colored adhesive materials were found on the tape side, the ink image was almost peeled off on the image side, and the base material was visually confirmed.

<Evaluation of image quality>

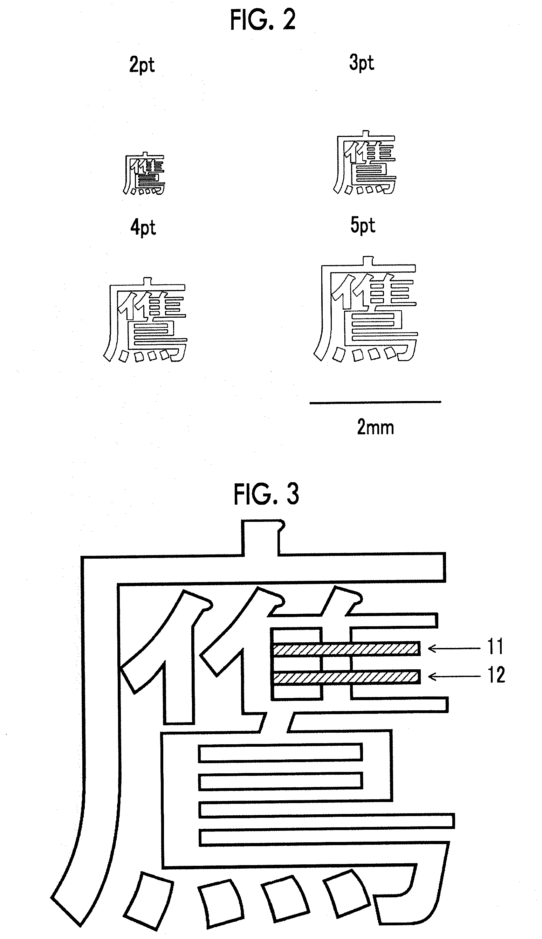

In each example and each comparative example, the resin base material listed in Table 2 was coated with the pretreatment liquid listed in Table 2 so as to have a liquid coating amount of approximately 1.7 g/m$^2$ using a wire bar coater, and dried at 50°C for 2 seconds immediately after the coating. Thereafter, the character (Unicode: U+9DF9) shown in Fig. 2 was output in 2 pt, 3 pt, 4 pt, and 5 pt under the same image recording conditions as the image recording conditions for the evaluation of the adhesiveness, the image quality was evaluated based on the following evaluation standards. pt indicates the DTP point representing the font size, and 1 pt is 1/72 inch. The evaluation results are listed in Table 2.

5: 2 pt characters were able to be reproduced.
4: 3 pt characters were able to be reproduced, but 2 pt characters were not able to be reproduced.
3: 4 pt characters were able to be reproduced, but 3 pt characters were not able to be reproduced.
2: 5 pt characters were able to be reproduced, but 4 pt characters were not able to be reproduced.
1: 5 pt characters were not able to be reproduced.

Further, the expression "able to be reproduced" means that the horizontal line indicated by 11 shown in Fig. 3 and the horizontal line indicated by 12 shown in Fig. 3 in the characters shown in Fig. 2 were separated and printed in a case where the characters were confirmed from a place separated by 0.5 m.

[Table 2]

| | Resin base material | Pretreatment liquid | Particles containing specific resin | | | Aggregating agent | Mass ratio (particles containing specific resin:aggregating agent) | Content of water-soluble organic solvent having SP value of 13 or less in pretreatment liquid (% by mass) | Evaluation results | | |
|---|---|---|---|---|---|---|---|---|---|---|---|
| | | | Tg (°C) | Contact angle (°) | Addition amount (% by mass) | Type | | | Transfer of component contained in pretreatment liquid | Adhesiveness | Image quality |
| Example 1 | A | Pretreatment liquid 1 | 55 | 40 | 10 | Malonic acid | 2:1 | 0 | 5 | 5 | 5 |
| Example 2 | A | Pretreatment liquid 2 | 55 | 30 | 10 | Malonic acid | 2:1 | 0 | 5 | 5 | 5 |
| Example 3 | A | Pretreatment liquid 3 | 63 | 33 | 10 | Malonic acid | 2:1 | 0 | 5 | 4 | 5 |
| Example 4 | A | Pretreatment liquid 4 | 110 | 38 | 10 | Malonic acid | 2:1 | 0 | 5 | 3 | 5 |
| Example 5 | A | Pretreatment liquid 5 | 64 | 43 | 10 | Malonic acid | 2:1 | 0 | 5 | 3 | 5 |
| Example 6 | A | Pretreatment liquid 6 | 60 | 21 | 10 | Malonic acid | 2:1 | 0 | 4 | 5 | 5 |
| Example 7 | A | Pretreatment liquid 7 | 110 | 39 | 10 | Malonic acid | 2:1 | 0 | 5 | 3 | 5 |
| Example 8 | A | Pretreatment liquid 8 | 55 | 29 | 10 | Malonic acid | 2:1 | 0 | 5 | 5 | 5 |
| Example 9 | A | Pretreatment liquid 9 | 67 | 64 | 10 | Malonic acid | 2:1 | 0 | 4 | 3 | 5 |
| Example 10 | A | Pretreatment liquid 10 | 34 | 28 | 10 | Malonic acid | 2:1 | 0 | 4 | 3 | 5 |
| Example 11 | A | Pretreatment liquid 11 | 94 | 28 | 10 | Malonic acid | 2:1 | 0 | 4 | 3 | 5 |
| Example 12 | A | Pretreatment liquid 12 | 55 | 30 | 10 | Acetic acid | 2:1 | 0 | 5 | 5 | 4 |

| | Resin base material | Pretreatment liquid | Particles containing specific resin | | | Aggregating agent | Mass ratio (particles containing specific resin:aggregating agent) | Content of water-soluble organic solvent having SP value of 13 or less in pretreatment liquid (% by mass) | Evaluation results | | |
|---|---|---|---|---|---|---|---|---|---|---|---|
| | | | Tg (°C) | Contact angle (°) | Addition amount (% by mass) | Type | | | Transfer of component contained in pretreatment liquid | Adhesiveness | Image quality |
| Example 13 | A | Pretreatment liquid 13 | 55 | 30 | 10 | CaCl$_2$ | 2:1 | 0 | 5 | 4 | 3 |
| Example 14 | A | Pretreatment liquid 14 | 55 | 30 | to | TC-310 | 2:1 | 0 | 5 | 3 | 3 |
| Example 15 | A | Pretreatment liquid 15 | 55 | 30 | 20 | Malonic acid | 15:1 | 0 | 5 | 5 | 3 |
| Example 16 | A | Pretreatment liquid 16 | 55 | 30 | 3 | Malonic acid | 1:2 | 0 | 3 | 3 | 5 |
| Example 17 | A | Pretreatment liquid 17 | 55 | 30 | 10 | Malonic acid | 2:1 | 15 | 3 | 3 | 4 |
| Example 18 | B | Pretreatment liquid 1 | 55 | 40 | 10 | Malonic acid | 2:1 | 0 | 5 | 5 | 5 |
| Example 19 | B | Pretreatment liquid 2 | 55 | 30 | 10 | Malonic acid | 2:1 | 0 | 5 | 5 | 5 |
| Example 20 | B | Pretreatment liquid 3 | 63 | 33 | 10 | Malonic acid | 2:1 | 0 | 5 | 5 | 5 |
| Example 21 | C | Pretreatment liquid 1 | 55 | 40 | 10 | Malonic acid | 2:1 | 0 | 5 | 3 | 5 |
| Example 22 | C | Pretreatment liquid 2 | 55 | 30 | 10 | Malonic acid | 2:1 | 0 | 5 | 4 | 5 |
| Example 23 | C | Pretreatment liquid 3 | 63 | 33 | 10 | Malonic acid | 2:1 | 0 | 5 | 3 | 5 |
| Example 24 | D | Pretreatment liquid 1 | 55 | 40 | 10 | Malonic acid | 2:1 | 0 | 5 | 5 | 5 |

(continued)

| | Resin base material | Pretreatment liquid | Particles containing specific resin | | | Aggregating agent | Mass ratio (particles containing specific resin:aggregating agent) | Content of water-soluble organic solvent having SP value of 13 or less in pretreatment liquid (% by mass) | Evaluation results | | |
| | | | Tg (°C) | Contact angle (°) | Addition amount (% by mass) | Type | | | Transfer of component contained in pretreatment liquid | Adhesiveness | Image quality |
|---|---|---|---|---|---|---|---|---|---|---|---|
| Example 25 | D | Pretreatment liquid 2 | 55 | 30 | 10 | Malonic acid | 2:1 | 0 | 5 | 5 | 5 |
| Example 26 | D | Pretreatment liquid 3 | 63 | 33 | 10 | Malonic acid | 2:1 | 0 | 5 | 5 | 5 |
| Comparative Example 1 | A | Comparative pretreatment liquid 1 | 8 | 18 | 10 | Malonic acid | 2:1 | 0 | 2 | 3 | 5 |
| Comparative Example 2 | A | Comparative pretreatment liquid 2 | 47 | 18 | 10 | Malonic acid | 2:1 | 0 | 2 | 4 | 5 |
| Comparative Example 3 | A | Comparative pretreatment liquid 3 | -20 | 32 | 10 | Malonic acid | 2:1 | 0 | 1 | 2 | 5 |
| Comparative Example 4 | A | Comparative pretreatment liquid 4 | 20 | 13 | 10 | Malonic acid | 2:1 | 0 | 1 | 2 | 5 |
| Comparative Example 5 | A | Comparative pretreatment liquid 5 | -10 | 24 | 10 | Malonic acid | 2:1 | 0 | 2 | 2 | 5 |
| Comparative Example 6 | A | Comparative pretreatment liquid 6 | 55 | 30 | 10 | None | - | - | 5 | 5 | 1 |
| Comparative Example 8 | A | Comparative pretreatment liquid 7 | 70 | 15 | 10 | Malonic acid | 2:1 | 0 | 1 | 3 | 5 |

EP 3 647 065 B1

(continued)

| | Resin base material | Pretreatment liquid | Particles containing specific resin | | | Aggregating agent | Mass ratio (particles containing specific resin:aggregating agent) | Content of water-soluble organic solvent having SP value of 13 or less in pretreatment liquid (% by mass) | Evaluation results | | |
| | | | Tg (°C) | Contact angle (°) | Addition amount (% by mass) | Type | | | Transfer of component contained in pretreatment liquid | Adhesiveness | Image quality |
|---|---|---|---|---|---|---|---|---|---|---|---|
| Comparative Example 9 | A | Comparative pretreatment liquid 8 | -17 | 18 | 10 | Malonic acid | 2:1 | 0 | 1 | 2 | 5 |

EP 3 647 065 B1

Examples 6 and 9 are reference examples.

The details of the abbreviations listed in Table 2 are as follows.

[Resin base material]

· Resin base material A: FE2001 (resin base material, polyethylene terephthalate (PET) medium, manufactured by Futamura Chemical Co., Ltd.), 25 μm
· Resin base material B: OPP (biaxially oriented polypropylene) TOYOBO P6181, 25μm
· Resin base material C: Nylon Unitika Emblem On-25, 25μm
· Resin base material D: polyethylene, manufactured by Futamura Chemical Co., Ltd., LL-RP2, 30 μm

These resin base materials correspond to the impermeable medium in the present disclosure.

As shown in the results listed in Table 2, in Examples 1 to 23 in which the pretreatment liquid containing a specific resin with a Tg of 30°C or higher and a contact angle of 20° or greater and containing a polyvalent metal compound and an aggregating agent, it was found that transfer of the component contained in the pretreatment liquid in the printed material was suppressed compared to Comparative Examples 1 to 5 and 7 to 9.

Further, in Examples 1 to 23, it was found that the image quality of the printed material was excellent compared to Comparative Example 6.

Based on the results of Examples 1, 2, 3, 4, 5, 7, 9, and 10, it was found that in a case where the Tg of the specific resin was in a range of 40°C to 60°C, a printed material with an image having excellent adhesiveness and being unlikely to be peeled off was obtained.

Based on the results of Examples 1, 2, 6, and 9, it was found that in a case where the contact angle of the specific resin was in a range of 25°C to 45°C, the balance between the adhesiveness and suppression of transfer of the component contained in the pretreatment liquid in the printed material was further excellent.

Based on comparison of Examples 1 and 2 with Examples 10 and 11, it was found that in a case where the specific resin is a polyester resin, an image having excellent adhesiveness and being unlikely to be peeled off in the printed material was obtained.

Based on the comparison of Example 2 with Examples 15 and 16, it was found that in a case where the content of the particles containing a specific resin was in a range of 5% by mass to 20% by mass with respect to the total mass of the pretreatment liquid, the balance between the adhesiveness and suppression of transfer of the component contained in the pretreatment liquid in the printed material was further excellent.

Based on the comparison of Example 2 with Examples 15 and 16, it was found that in a case where the mass ratio between the particles containing a specific resin and the aggregating agent (particles containing specific resin:aggregating agent) was set to be in a range of 10:1 to 1:1, the balance between the image quality in the printed material, suppression of transfer of the component contained in the pretreatment liquid, and the adhesiveness was further excellent.

Based on the comparison of Example 2 with Examples 12 to 14, it was found that in a case where the aggregating agent was dicarboxylic acid, the image quality in the printed material was further excellent.

Based on the comparison of Example 2 with Example 17, it was found that the pretreatment liquid did not contain a water-soluble organic solvent having an SP value of 13 or less or the content thereof was greater than 0% by mass and less than 10% by mass with respect to the total mass of the pretreatment liquid, it was found that the balance between the adhesiveness and suppression of transfer of the component contained in the pretreatment liquid in the printed material was further excellent.

Explanation of References

11: supply unit
12: pretreatment liquid application unit
13: pretreatment liquid drying zone
14: ink jetting unit
15: ink drying zone
16: accumulation unit
20: anilox roller
22: coating roller
24: opposing roller

30K, 30C, 30M, 30Y, 30A, 30B: ink jet head
41, 42, 43, 44, 45, 46: transport roller

**Claims**

1. A pretreatment liquid for impermeable medium printing, comprising:

   resin particles which contain a resin having a glass transition temperature of 30°C or higher and a water contact angle in a range of 25° to 45°;
   at least one aggregating agent selected from the group consisting of a polyvalent metal compound, an organic acid or a salt thereof, and a metal complex; and
   water,
   wherein the glass transition temperature measurement is performed in conformity with the method described in JIS K 7121 (1987) or JIS K 6240 (2011),
   wherein the contact angle measurement is performed in conformity with a static method described in JIS R3257:1999.

2. The pretreatment liquid for impermeable medium printing according to claim 1,
   wherein the glass transition temperature of the resin particles is in a range of 40°C to 60°C.

3. The pretreatment liquid for impermeable medium printing according to claim 1 or 2,
   wherein the resin contained in the resin particles includes a polyester resin.

4. The pretreatment liquid for impermeable medium printing according to any one of claims 1 to 3,
   wherein a volume average particle diameter of the resin particles is in a range of 1 nm to 300 nm, wherein the volume average particle diameter is measured using a laser diffraction scattering particle size distribution analyzer.

5. The pretreatment liquid for impermeable medium printing according to any one of claims 1 to 4,
   wherein a content of the resin particles is in a range of 5% by mass to 25% by mass with respect to the total mass of the pretreatment liquid for impermeable medium printing.

6. The pretreatment liquid for impermeable medium printing according to any one of claims 1 to 5,
   wherein a mass ratio of a content of the resin particles to a content of the aggregating agent is in a range of 10:1 to 1:1.

7. The pretreatment liquid for impermeable medium printing according to any one of claims 1 to 6,
   wherein the aggregating agent contains an organic acid.

8. The pretreatment liquid for impermeable medium printing according to claim 7,
   wherein the organic acid is dicarboxylic acid.

9. The pretreatment liquid for impermeable medium printing according to any one of claims 1 to 8,
   wherein the pretreatment liquid does not contain a water-soluble organic solvent having a solubility parameter of 13 or less or a content of the water-soluble organic solvent having a solubility parameter of 13 or less is greater than 0% by mass and less than 10% by mass with respect to the total mass of the pretreatment liquid for impermeable medium printing.

10. The pretreatment liquid for impermeable medium printing according to any one of claims 1 to 9,
    wherein the pretreatment liquid is used for printing of an impermeable medium containing polypropylene, polyethylene terephthalate, nylon, or polyethylene.

11. Use of the pretreatment liquid for impermeable medium printing according to any one of claims 1 to 10 in a method of producing a base material for printing, the method comprising:
    a pretreatment step of applying the pretreatment liquid for impermeable medium printing to an impermeable medium.

12. An image recording method comprising:

    a pretreatment step of applying the pretreatment liquid for impermeable medium printing according to any one of claims 1 to 10 to an impermeable medium; and
an image recording step of recording an image by jetting an ink composition which contains a colorant and water to a surface to which the pretreatment liquid for impermeable medium printing has been applied according to an ink jet method.

13. An ink set comprising:

an ink composition which contains a colorant and water; and
the pretreatment liquid for impermeable medium printing according to any one of claims 1 to 10.

14. An ink set comprising:

an ink composition which contains a colorant and water; and
a pretreatment liquid which contains resin particles containing a resin having a glass transition temperature of 30°C or higher and a water contact angle in a range of 25° to 45°, at least one aggregating agent selected from the group consisting of a polyvalent metal compound, an organic acid or a salt thereof, and a metal complex, and water,
wherein the pretreatment liquid does not contain a water-soluble organic solvent having a solubility parameter of 13 or less or a content of the water-soluble organic solvent having a solubility parameter of 13 or less is greater than 0% by mass and less than 10% by mass.

**Patentansprüche**

1. Vorbehandlungsflüssigkeit zum Bedrucken eines undurchlässigen Mediums, umfassend:

Harzteilchen, die ein Harz mit einer Glasübergangstemperatur von 30°C oder höher und einem Wasserkontaktwinkel in einem Bereich von 25° bis 45° enthalten;
mindestens ein Aggregationsmittel, ausgewählt aus der Gruppe bestehend aus einer mehrwertigen Metallverbindung, einer organischen Säure oder einem Salz davon und einem Metallkomplex; und
Wasser,

wobei die Glasübergangstemperaturmessung in Übereinstimmung mit dem in JIS K 7121 (1987) oder JIS K 6240 (2011) beschriebenen Verfahren ausgeführt wird.

2. Vorbehandlungsflüssigkeit zum Bedrucken eines undurchlässigen Mediums nach Anspruch 1, wobei die Glasübergangstemperatur der Harzteilchen in einem Bereich von 40°C bis 60°C liegt.

3. Vorbehandlungsflüssigkeit zum Bedrucken eines undurchlässigen Mediums nach Anspruch 1 oder 2,
wobei das in den Harzteilchen enthaltene Harz ein Polyesterharz enthält.

4. Vorbehandlungsflüssigkeit zum Bedrucken eines undurchlässigen Mediums nach einem der Ansprüche 1 bis 3,
wobei ein volumengemittelter Teilchendurchmesser der Harzteilchen in einem Bereich von 1 nm bis 300 nm liegt,
wobei der volumengemittelte Teilchendurchmesser mit einem Laserbeugungsstreuungs-Teilchengrößenverteilungsanalysator gemessen wird.

5. Vorbehandlungsflüssigkeit zum Bedrucken eines undurchlässigen Mediums nach einem der Ansprüche 1 bis 4,
wobei ein Gehalt der Harzpartikeln in einem Bereich von 5 Massen-% bis 25 Massen-%, bezogen auf die Gesamtmasse der Vorbehandlungsflüssigkeit zum Bedrucken eines undurchlässigen Mediums, liegt.

6. Vorbehandlungsflüssigkeit zum Bedrucken eines undurchlässigen Mediums nach einem der Ansprüche 1 bis 5,
wobei ein Massenverhältnis eines Gehalts an den Harzteilchen zu einem Gehalt an dem Aggregationsmittel in einem Bereich von 10:1 bis 1:1 liegt.

7. Vorbehandlungsflüssigkeit zum Bedrucken eines undurchlässigen Mediums nach einem der Ansprüche 1 bis 6,
wobei das Aggregationsmittel eine organische Säure enthält.

8. Vorbehandlungsflüssigkeit zum Bedrucken eines undurchlässigen Mediums nach Anspruch 7, wobei die organische Säure eine Dicarbonsäure ist.

9. Vorbehandlungsflüssigkeit zum Bedrucken eines undurchlässigen Mediums nach einem der Ansprüche 1 bis 8, wobei die Vorbehandlungsflüssigkeit kein wasserlösliches organisches Lösungsmittel mit einem Löslichkeitsparameter von 13 oder weniger enthält oder ein Gehalt an dem wasserlöslichen organischen Lösungsmittel mit einem Löslichkeitsparameter von 13 oder weniger größer als 0 Massenprozent und kleiner als 10 Massenprozent in Bezug auf die Gesamtmasse der Vorbehandlungsflüssigkeit zum Bedrucken eines undurchlässigen Mediums ist.

10. Vorbehandlungsflüssigkeit zum Bedrucken eines undurchlässigen Mediums nach einem der Ansprüche 1 bis 9, wobei die Vorbehandlungsflüssigkeit zum Bedrucken eines undurchlässigen Mediums verwendet wird, das Polypropylen, Polyethylenterephthalat, Nylon oder Polyethylen enthält.

11. Verwendung der Vorbehandlungsflüssigkeit zum Bedrucken eines undurchlässigen Mediums nach einem der Ansprüche 1 bis 10 in einem Verfahren zur Herstellung eines Basismaterials zum Bedrucken, wobei das Verfahren umfasst:
einen Vorbehandlungsschritt des Auftragens der Vorbehandlungsflüssigkeit zum Bedrucken eines undurchlässigen Mediums auf ein undurchlässiges Medium.

12. Ein Bildaufzeichnungsverfahren, umfassend:

einen Vorbehandlungsschritt des Auftragens der Vorbehandlungsflüssigkeit zum Bedrucken eines undurchlässigen Mediums nach einem der Ansprüche 1 bis 10 auf ein undurchlässiges Medium; und
einen Bildaufzeichnungsschritt des Aufzeichnens eines Bildes durch Ausstoßen einer Tintenzusammensetzung, die ein Farbmittel und Wasser enthält, auf eine Oberfläche, auf die die Vorbehandlungsflüssigkeit zum Bedrucken eines undurchlässigen Mediums gemäß einem Tintenstrahlverfahren aufgebracht wurde.

13. Tintenset, das Folgendes umfasst:

eine Tintenzusammensetzung, die ein Farbmittel und Wasser enthält; und
die Vorbehandlungsflüssigkeit zum Bedrucken eines undurchlässigen Mediums nach einem der Ansprüche 1 bis 10.

14. Tintenset, umfassend:

eine Tintenzusammensetzung, die ein Farbmittel und Wasser enthält; und
eine Vorbehandlungsflüssigkeit, die Harzteilchen, die ein Harz mit einer Glasübergangstemperatur von 30°C oder höher und einem Wasserkontaktwinkel in einem Bereich von 25° bis 45° enthalten, mindestens ein Aggregationsmittel, ausgewählt aus der Gruppe bestehend aus einer mehrwertigen Metallverbindung, einer organischen Säure oder einem Salz davon und einem Metallkomplex, und Wasser enthält,
wobei die Vorbehandlungsflüssigkeit kein wasserlösliches organisches Lösungsmittel mit einem Löslichkeitsparameter von 13 oder weniger enthält oder ein Gehalt an dem wasserlöslichen organischen Lösungsmittel mit einem Löslichkeitsparameter von 13 oder weniger größer als 0 Massenprozent und kleiner als 10 Massenprozent ist.

**Revendications**

1. Liquide de prétraitement pour impression de support imperméable, comprenant :

des particules de résine, lesquelles contiennent une résine présentant une température de transition vitreuse supérieure ou égale à 30 °C, et un angle de contact avec l'eau dans une plage allant de 25 ° à 45 ° ;
au moins un agrégant sélectionné parmi le groupe consistant en un composé métallique polyvalent, un acide organique ou un sel de celui-ci, et un complexe métallique, et
de l'eau,
dans lequel la mesure de température de transition vitreuse est réalisée conformément la méthode décrite dans JIS K 7121 (1987) ou JIS K 6240 (2011), et
dans lequel la mesure d'angle de contact est réalisée conformément à la méthode statique décrite dans JIS R3257:1999.

**2.** Liquide de prétraitement pour impression de support imperméable selon la revendication 1, dans lequel la température de transition vitreuse des particules de résine est comprise dans une plage de 40 °C à 60 °C.

**3.** Liquide de prétraitement pour impression de support imperméable selon la revendication 1 ou 2, dans lequel la résine contenue dans les particules de résine inclut une résine de polyester.

**4.** Liquide de prétraitement pour impression de support imperméable selon l'une quelconque des revendications 1 à 3, dans lequel un diamètre de particules moyen en volume des particules de résine est compris dans une plage allant de 1 nm à 300 nm, et dans lequel le diamètre de particules moyen en volume est mesuré à l'aide d'un analyseur de distribution de taille de particules à dispersion par diffraction laser.

**5.** Liquide de prétraitement pour impression de support imperméable selon l'une quelconque des revendications 1 à 4, dans lequel une teneur des particules de résine est comprise dans une plage allant de 5 % en masse à 25 % en masse par rapport à la masse totale du liquide de prétraitement pour impression de support imperméable.

**6.** Liquide de prétraitement pour impression de support imperméable selon l'une quelconque des revendications 1 à 5, dans lequel un rapport de masse entre une teneur des particules de résine et une teneur de l'agrégant est compris dans une plage allant de 10 : 1 à 1 : 1.

**7.** Liquide de prétraitement pour impression de support imperméable selon l'une quelconque des revendications 1 à 6, dans lequel l'agrégant contient un acide organique.

**8.** Liquide de prétraitement pour impression de support imperméable selon la revendication 7, dans lequel l'acide organique est de l'acide dicarboxylique.

**9.** Liquide de prétraitement pour impression de support imperméable selon l'une quelconque des revendications 1 à 8, dans lequel le liquide de prétraitement ne contient pas de solvant organique soluble dans l'eau présentant un paramètre de solubilité inférieur ou égal à 13, ou une teneur du solvant organique soluble dans l'eau présentant un paramètre de solubilité inférieur ou égal à 13 est supérieure à 0% en masse, et inférieure ou égale à 10 % en masse, par rapport à la masse totale du liquide de prétraitement pour impression de support imperméable.

**10.** Liquide de prétraitement pour impression de support imperméable selon l'une quelconque des revendications 1 à 9, dans lequel le liquide de prétraitement pour impression de support imperméable est utilisé pour l'impression d'un support imperméable contenant du polypropylène, du polyéthylène téréphtalate, du nylon, ou du polyéthylène.

**11.** Utilisation du liquide de prétraitement selon l'une quelconque des revendications 1 à 10 dans un procédé pour produire un matériau de base pour impression, le procédé comprenant l'étape suivante :
une étape de prétraitement pour appliquer le liquide de prétraitement pour impression de support imperméable sur un support imperméable.

**12.** Procédé d'enregistrement d'image, comprenant les étapes suivantes :

une étape de prétraitement pour appliquer le liquide de prétraitement pour impression de support imperméable selon l'une quelconque des revendications 1 à 10 sur un support imperméable, et
une étape d'enregistrement d'image pour enregistrer une image en projetant une composition d'encre, laquelle contient un colorant et de l'eau, sur une surface sur laquelle le liquide de prétraitement pour impression de support imperméable a été appliqué conformément à un procédé à jet d'encre.

**13.** Jeu d'encres, comprenant :

une composition d'encre, laquelle contient un colorant et de l'eau, et
le liquide de prétraitement pour impression de support imperméable selon l'une quelconque des revendications 1 à 10.

**14.** Jeu d'encres, comprenant :

une composition d'encre, laquelle contient un colorant et de l'eau, et

un liquide de prétraitement, lequel contient des particules de résine contenant une résine présentant une température de transition vitreuse supérieure ou égale à 30 °C, et un angle de contact avec l'eau dans une plage allant de 25 ° à 45 °, au moins un agrégant sélectionné parmi le groupe consistant en un composé métallique polyvalent, un acide organique ou un sel de celui-ci, et un complexe métallique, et de l'eau,

dans lequel le liquide de traitement ne contient pas de solvant organique soluble dans l'eau présentant un paramètre de solubilité inférieur ou égal à 13, ou une teneur du solvant organique soluble dans l'eau présentant un paramètre de solubilité inférieur ou égal à 13 est supérieure à 0% en masse, et inférieure à 10 % en masse.

FIG. 1

# FIG. 2

2pt                          3pt

4pt                          5pt

———————
2mm

# FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017013349 A
- JP 2013018156 A
- JP 2010115854 A
- JP 2009241586 A
- EP 2100929 A1
- JP 2016188345 A
- JP 2013001854 A
- JP 2011042150 A
- JP 59157636 A
- JP S59157636 A
- JP 2003322926 A
- JP 2004325707 A
- JP 2004309806 A
- JP 2003306623 A
- JP 54059936 A
- JP 2016145312 A
- JP 2010083021 A
- JP 2009234221 A
- JP 1998175315 A
- JP H10175315 A

**Non-patent literature cited in the description**

- *Journal of the Adhesion Society of Japan*, 1993, vol. 29 (5)